(19) Europäisches Patentamt / European Patent Office / Office européen des brevets

(11) **EP 2 296 369 A2**

(12) **EUROPEAN PATENT APPLICATION**

(43) Date of publication:
16.03.2011 Bulletin 2011/11

(51) Int Cl.:
*H04N 5/445* (2011.01)

(21) Application number: 10161055.8

(22) Date of filing: 26.04.2010

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA ME RS

(30) Priority: 11.09.2009 JP 2009210997

(71) Applicant: Kabushiki Kaisha Toshiba
Tokyo 105-8001 (JP)

(72) Inventors:
• **Fujibayashi, Toshihiro**
  **Tokyo 105-8001 (JP)**
• **Kizuka, Yoshihisa**
  **Tokyo 105-8001 (JP)**
• **Saijo, Hitoshi**
  **Tokyo 105-8001 (JP)**
• **Onodera, Mieko**
  **Tokyo 105-8001 (JP)**
• **Tanaka, Sayoko**
  **Tokyo 105-8001 (JP)**
• **Yamane, Nobuhiro**
  **Tokyo 105-8001 (JP)**
• **Yoshihara, Hiroto**
  **Tokyo 105-8001 (JP)**
• **Yoneyama, Takahisa**
  **Tokyo 105-8001 (JP)**

(74) Representative: **Henkel, Feiler & Hänzel**
**Maximiliansplatz 21**
**D-80333 München (DE)**

(54) **Display processing apparatus and display processing method**

(57) According to one embodiment, a display processing apparatus includes a relation calculator (104), a receiver (101), and a display controller (106). The relation calculator (104) calculates relation between key content and second contents for each of items. The receiver (101) receives an instruction. The display controller (106) displays list information in which pieces of display information of second contents with high relation are arranged in directions assigned to the items, respectively, based on the position of display information of the key content. The list information is displayed in first display mode that allows scrolling in the directions. Upon receipt of the instruction indicating one of the items, the display controller (106) displays the display information of the key content and that of second content with high relation with respect to the item in second display mode that allows scrolling in a direction assigned to the item and the opposite direction.

FIG.4

**Description**

BACKGROUND

1. Field

One embodiment of the invention relates to a display processing apparatus and a display processing method.

2. Description of the Related Art

In recent years, with increased capability of AV equipment for storing contents (video/audio data) and improved seamless accessibility of contents between equipment, let alone within the same equipment, or on a network, there has been a proliferation in the number of contents accessible to users. Accordingly, there have been disclosed receivers that allow users to select and view such contents.

Besides, with AV equipment including a digital television receiver, various contents can be viewed. Examples of the contents include content already stored in a storage medium such as a hard disk drive (HDD) and digital broadcast content. Further, through an electronic program guide (EPG), contents to be broadcasted can be checked. Thus, there is a need for a technology to provide a screen that allows the user to select content from such numerous contents.

Japanese Patent Application Publication (KOKAI) No. 2002-175321 discloses a conventional technology related to an interface that displays contents on a two-dimensional plane. According to the conventional technology, contents are arranged on a two-dimensional plane where similarity is represented by distance. This facilitates the view of desired content.

With the conventional technology, since a plurality of contents are arranged on a two-dimensional plane where similarity is represented by distance, it is annoying to have to scroll the screen when there are numerous contents. In addition, the contents are not appropriately classified. Therefore, it is difficult for the user to determine where or in which direction desired content is displayed. Thus, the user may fail to find the desired content.

It is therefore an object of the invention to provide a display processing apparatus and a display processing method capable of facilitating the operation of finding desired content.

SUMMARY OF THE INVENTION

To overcome the problems and achieve the object mentioned above, according to an aspect of the invention, a display processing apparatus comprises a relation calculator, a receiver, and a display controller. The relation calculator is configured to calculate relation between key content as a reference of search and each of second contents based on similarity with respect to each of items. The receiver is configured to receive a specific instruction. The display controller is configured to display, on a display device, list information in which pieces of display information of second contents, each with high relation to the key content with respect to one of the items, are arranged in display areas located in directions assigned to the items, respectively, based on the position of display information of the key content. The list information is displayed in first display mode that allows scrolling in the directions assigned to the items. When the receiver receives the specific instruction indicating one of the items, the display controller displays the display information of the key content and pieces of display information of second contents with high relation to the key content with respect to the item in second display mode that allows scrolling in a direction assigned to the item and a direction opposite the direction.

According to another aspect of the invention, there is provided a display processing method applied to a display processing apparatus. The display processing method comprises: a relation calculator calculating relation between key content as a reference of search and each of second contents based on similarity with respect to each of items; a display controller displaying, on a display device, list information in which pieces of display information of second contents, each with high relation to the key content with respect to one of the items, are arranged in display areas located in directions assigned to the items, respectively, based on the position of display information of the key content, the list information being displayed in first display mode that allows scrolling in the directions assigned to the items; a receiver receiving a specific instruction; and the display controller displaying, upon receipt of the specific instruction indicating one of the items, the display information of the key content and pieces of display information of second contents with high relation to the key content with respect to the item in second display mode that allows scrolling in a direction assigned to the item and a direction opposite the direction.

As described above, according to an aspect of the invention, it is possible to improve the operability to search for display information.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a digital television (TV) display device according to an embodiment of the invention;

FIG. 2 is an exemplary schematic diagram of metadata when a TV program is content in the embodiment;

FIG. 3 is an exemplary schematic diagram of a structure of a table where an electronic program guide (EPG) storage module stores EPG information in the embodiment;

FIG. 4 is an exemplary schematic diagram of an EPG indicating contents being displayed and those to be displayed on a display module in the embodiment;

FIG. 5 is an exemplary schematic diagram of a screen displayed on the display module when a key corresponding to program search is pressed on the display screen of FIG. 4 in the embodiment;

FIGS. 6A and 6B are exemplary schematic diagrams of display information in the embodiment;

FIGS. 7A and 7B are exemplary schematic diagrams for explaining items, item axes, areas in the embodiment;

FIG. 8 is exemplary schematic diagrams for explaining related content list information in the embodiment;

FIG. 9 is an exemplary schematic diagram of pieces of display information of contents arranged in up, down, left, and right operation directions by a display controller in the embodiment;

FIG. 10 is an exemplary schematic diagram of reference lines for the display controller to arrange pieces of display information of contents in the embodiment;

FIG. 11 is an exemplary schematic diagram of the related content list information in which pieces of display information of contents are arranged around display information of key content at the center in the embodiment;

FIGS. 12 to 14 are exemplary schematic diagrams for explaining the related content list information in the embodiment;

FIG. 15 is an exemplary schematic diagram of the related content list information indicating display information of key content and that of other contents in the embodiment;

FIG. 16 is an exemplary schematic diagram for explaining a screen transition when display mode is changed to item display mode in response to a specific instruction received by an operation receiver in the embodiment;

FIG. 17 is another exemplary schematic diagram for explaining a screen transition when display mode is changed to item display mode in response to a specific instruction received by the operation receiver in the embodiment;

FIG. 18 is an exemplary schematic diagram of a screen displayed in the item display mode with respect to each item in the embodiment;

FIG. 19 is an exemplary schematic diagram of a related content list screen displayed by the display controller in the item display mode in the embodiment;

FIG. 20 is an exemplary schematic diagram for explaining switch between full display mode and the item display mode in the embodiment;

FIG. 21 is an exemplary schematic diagram for explaining a screen transition when a focus moves on the related content list screen displayed by the display controller in the item display mode in the embodiment;

FIG. 22 is another exemplary schematic diagram for explaining a screen transition when a focus moves on the related content list screen displayed by the display controller in the item display mode in the embodiment;

FIG. 23 is an exemplary flowchart of the operation of the digital TV display device to switch the display mode of the related content list screen in the embodiment; and

FIG. 24 is an exemplary schematic diagram of the related content list information displayed by a display device such as a personal computer in the full display mode in the embodiment.

DETAILED DESCRIPTION

Various embodiments according to the invention will be described hereinafter with reference to the accompanying drawings.

Although a display processing apparatus and a display processing method of the embodiments will be described below as being applied to a digital television (TV) display device, this is by way of example only and is not to be construed to be limiting. The display processing apparatus and the display processing method may be applied to any AV equipment capable of displaying video or the like.

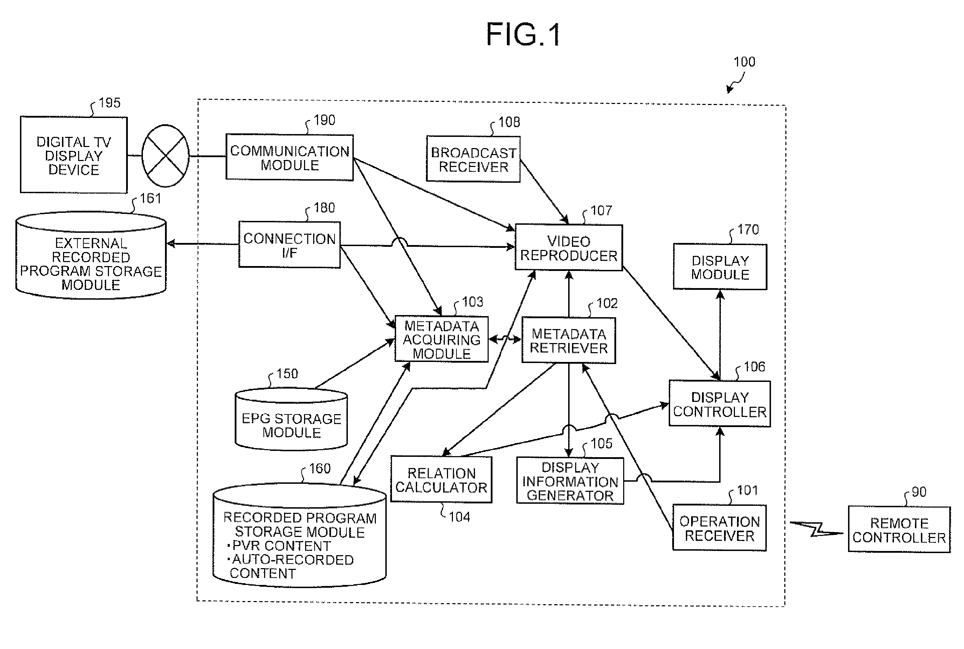

An embodiment of the invention will now be described with reference to FIG. 1. First, a description will be given of the functional configuration of a digital TV display device 100 according to the embodiment. FIG. 1 is a block diagram of the digital TV display device 100. As illustrated in FIG. 1, the digital TV display device 100 comprises an electronic program guide (EPG) storage module 150, a recorded program storage module 160, a display module 170, a connection interface (I/F) 180, and a communication module 190. The digital TV display device 100 is connected to an external recorded program storage module 161 via the connection I/F 180 and a digital TV display device 195 in an external network via the communication module 190.

Although not illustrated in the drawings, the digital TV display device 100 further comprises a processor, such as an application-specific integrated circuit (ASIC) or a central processing unit (CPU), and a storage device. Examples of the storage device include a read only memory (ROM) that stores a predetermined computer program for controlling the digital TV display device 100 and a random access memory (RAM) that provides a work area for the processor. The cooperation of the processor and the computer program stored in the storage device implements functional modules including an operation receiver 101, a metadata retriever 102, a metadata acquiring module 103, a relation calculator 104, a display information generator 105, a display controller 106, a video reproducer 107, and a broadcast receiver 108. In the following, video obtained by recording a TV program or the like will be referred to as content.

With the digital TV display device 100 illustrated in FIG. 1, in addition to content currently being broadcasted, content stored in the recorded program storage module 160 (hereinafter, "personal video recorder (PVR) content") can be viewed according to user operation.

The digital TV display device 100 further comprises digital broadcast tuners (not illustrated) corresponding to the number of broadcast stations. The digital broadcast tuners each automatically store content in the recorded program storage module 160. Hereinafter, the content automatically stored by the digital broadcast tuners will be referred to as "auto-recorded content". Unless the user provides an instruction to store the auto-recorded content as the PVR content, the auto-recorded content is automatically deleted when, for example, a week has elapsed since the recording thereof. Thus, with the digital TV display device 100 of the embodiment, the user can view contents that have already been broadcasted in the past one week.

As storing auto-recorded contents for one week, the digital TV display device 100 also stores an EPG for the past one week in the EPG storage module 150, which will be described later. Thus, regarding contents broadcasted for the past one week, the user can select desired content from the EPG (hereinafter, "past EPG") and view it.

In the embodiment, contents include those currently being broadcasted and to be broadcasted, PVR contents, and auto-recorded contents.

The recorded program storage module 160 is a storage medium such as a hard disk drive (HDD) or memory for storing content such as video. The recorded program storage module 160 stores metadata provided with content in association with the content.

The term "metadata" as used herein refers to information on content (content information). The recorded program storage module 160 stores metadata with respect to items by which contents are classified. More specifically, the recorded program storage module 160 stores, for items such as the title of content, the channel, the broadcast date and time, the cast, the program content (a keyword or a sentence indicating the content), and the genre, content information as to the items (i.e., metadata of the content) in an associated manner.

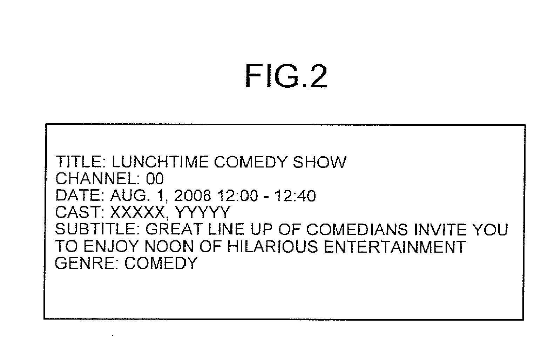

FIG. 2 illustrates an example of the metadata when a TV program is the content. The metadata illustrated in FIG. 2 represents information related to the content of a recorded TV program. The recorded program storage module 160 stores information such as the title of the TV program "Lunchtime Comedy Show", the channel "00", the broadcast date and time "August 1, 2008, 12:00 - 12:40", the cast "xxxxx, yyyyy", the subtitle "Great line up of comedians invite you to enjoy a noon of hilarious entertainment", and the genre "comedy".

Although an example is described above in which the metadata is provided as being preset, this is by way of example and not of limitation. The recorded program storage module 160 may receive information from the user thorough an input device such as the remote controller 90 or the keyboard of a personal computer, and store it as metadata in association with the content.

The EPG storage module 150 is a storage medium such as an HDD or a memory for storing an EPG obtained from an external server that manages and distributes the EPG or obtained through TV broadcasting. More specifically, the EPG storage module 150 obtains via the communication module 190 an EPG for TV, cable television (CATV), communications satellite (CS) broadcasting, broadcasting satellite (BS) broadcasting, and the like from a service provider server connected through a network such as the Internet. Alternatively, the EPG storage module 150 receives an EPG broadcasted through TV broadcasting via an antenna or a cable (not illustrated). Thus, the EPG storage module 150 stores the EPG. Further, the EPG storage module 150 stores status for each content.

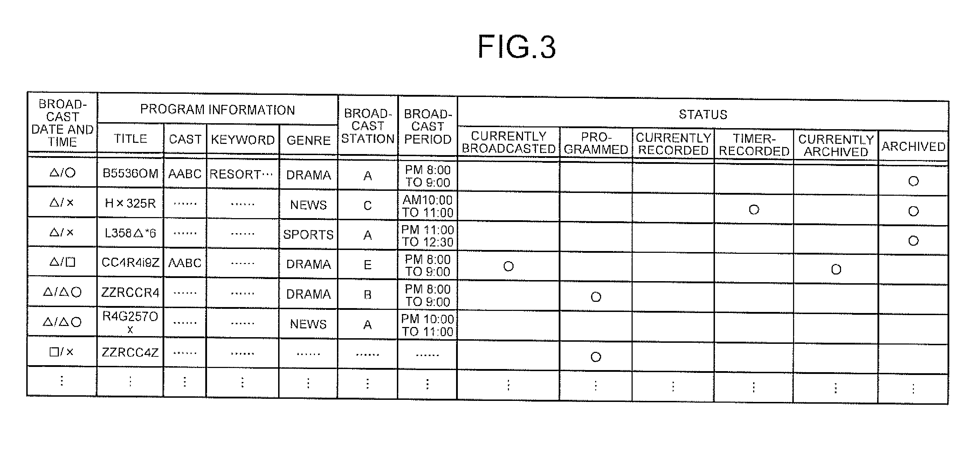

FIG. 3 illustrates an example of a structure of a table where the EPG storage module 150 stores EPG information. As illustrated in FIG. 3, the EPG storage module 150 stores such items as broadcast date and time, program information, broadcast station, broadcast period, status, and the like in association with one another with respect to each content (program).

The program information includes, as information (metadata) about content, for example, title, cast, keyword, genre, and the like. The information may be obtained from an EPG and also from the Internet or the like.

The status refers to information indicating the current state of content, such as "currently broadcasted", "programmed (to be timer-recorded)", "currently recorded", "timer-recorded", "currently archived", and "archived", which are associated with one another.

The mark "o" presented in the status columns of the table indicates the status of each content. For example, if a box of the "currently broadcasted" column is marked with "o", it means that corresponding content is currently being broadcasted. If a box of the "programmed" column is marked with "o", it means that corresponding content is to be stored as PVR content when broadcasted. If a box of the "currently recorded" column is marked with "o", it means that corresponding content is currently being recorded as PVR content.

If a box of the "timer-recorded" column is marked with "o", it means that corresponding content is stored as PVR content. If a box of the "currently archived" column is marked with "o", it means that corresponding content is currently being recorded as auto-recorded content. Further, if a box of the "archived" column is marked with "o", it means that corresponding content has been recorded as auto-recorded content.

That is, by referring to the status columns of the table in the EPG storage module 150, it is possible to specify which category each content is classified into, content currently being broadcasted, content to be broadcasted, PVR content, or auto-recorded content.

The metadata acquiring module 103 acquires information such as broadcast date and time, program information, broadcast channel, and broadcast period. The display controller 106 generates an EPG and various content list screens to display them.

The EPG contains list information on programs to be broadcasted during a period from the present time to a certain point in the future (e.g., after one week). The EPG also contains list information (past EPG) on programs (auto-recorded contents) broadcasted during a period from the present time to a certain point in the past (e.g., one week before). With this, by referring to the past EPG, the user can select content from the past EPG and view the auto-recorded content.

Incidentally, it is assumed that the information on programs stored in the EPG storage module 150 is periodically updated. For example, with the lapse of time or user operation, the setting of the status may be updated, and a record of content may be added or deleted.

The connection I/F 180 is an interface to the external recorded program storage module 161. Through the connection I/F 180, the digital TV display device 100 can store content in the external recorded program storage module 161. As with the recorded program storage module 160, the external recorded program storage module 161 stores metadata provided with content in association with the content. As in the case of the recorded program storage module 160, EPG information related to the content stored in the external recorded program storage module 161 is also stored in the EPG storage module 150.

The communication module 190 communicates via a network with various devices including the digital TV display device 195 that store content. The communication module 190 exchanges content (PVR content, auto-recorded content, etc.) and the like with other devices, and also transmits/receives the metadata of the content and an EPG stored in the digital TV display device 195. Thus, the digital TV display device 100 is capable of searching for or displaying content and the like stored in the digital TV display device 195.

In other words, the digital TV display device 100 allows the user to retrieve and view not only content stored therein but also content stored in other devices without regard to where the content is stored.

The display module 170 includes, for example, a liquid crystal display (LCD) for displaying text and an image, and displays content of a received TV program, stored content, an EPG, and the like.

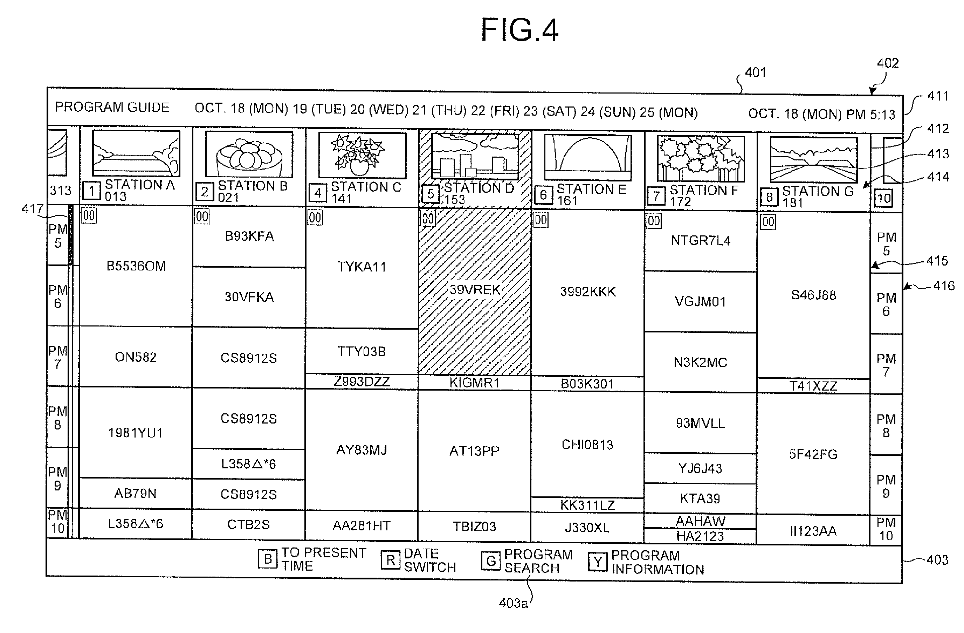

FIG. 4 illustrates an example of an EPG displayed by the display module 170 that indicates contents currently being broadcasted and to be broadcasted. As illustrated in FIG. 4, an EPG 402 is displayed on a display screen 401 of the digital TV display device 100. The EPG 402 includes a date and time display area 411 and a broadcast station display area 412. Displayed in the broadcast station display area 412 are a thumbnail 413 indicating a broadcast station, a broadcast station 414, and a program list 415 for each broadcast station. In addition, a time display area 416 indicates a time period in which each content is provided so that the user can visually recognize it, and a present time bar 417 indicates the present time.

As illustrated in FIG. 4, the EPG 402 further includes an operation guide area 403 for operation related to the EPG 402 or display of a content list screen. Operation items displayed in the operation guide area 403 correspond to color keys (not illustrated), respectively. That is, when one of the keys are pressed, operation corresponding to the key is performed. For example, if the user presses a color key corresponding to a program search 403a, a program search screen is displayed for search for content currently being broadcasted or content to be broadcasted.

According to the type of contents, the display module 170 also displays a past EPG indicating auto-recorded contents, a list of PVR contents, and the like, which may be displayed in any form including known ones.

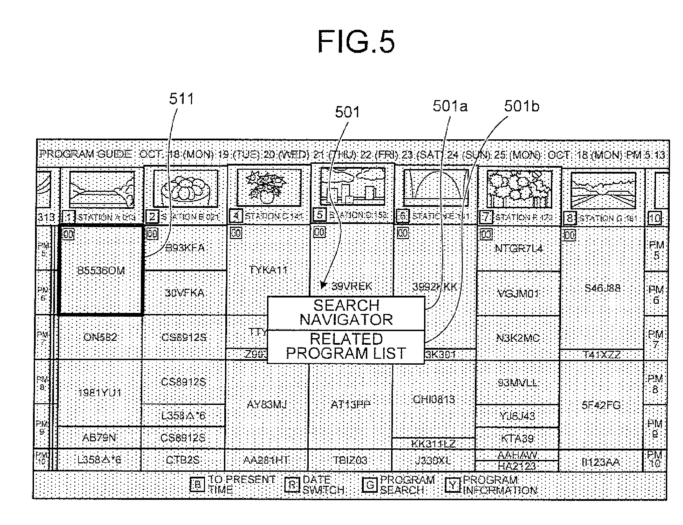

FIG. 5 illustrates an example of a screen displayed by the display module 170 when the key corresponding to the program search 403a is pressed on the display screen as illustrated in FIG. 4. As illustrated in FIG. 5, when the user selects a program search, the display module 170 displays a window 501. The window 501 selectably displays a search navigator 501a and a related program list 501b. If the user selects the related program list 501b using the remote controller 90, contents related to content (for example, content 511) selected on the display screen are searched for in the digital TV display device 100.

If the search navigator 501a is selected, a conventional search screen is displayed, and the description will not be provided. Meanwhile, if the related program list 501b is selected, the display module displays a list of related contents.

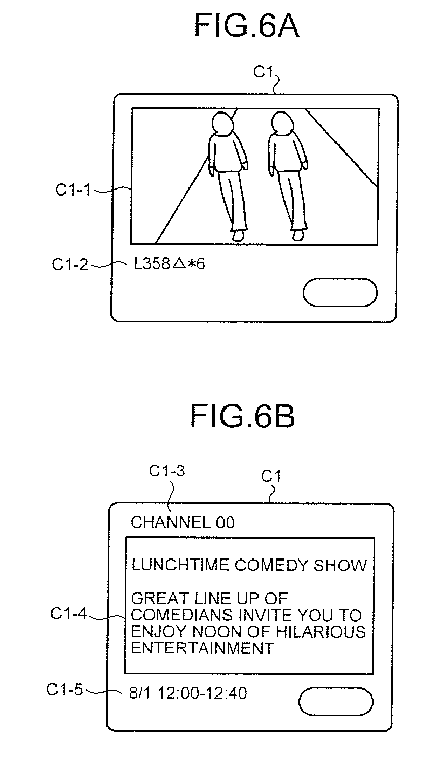

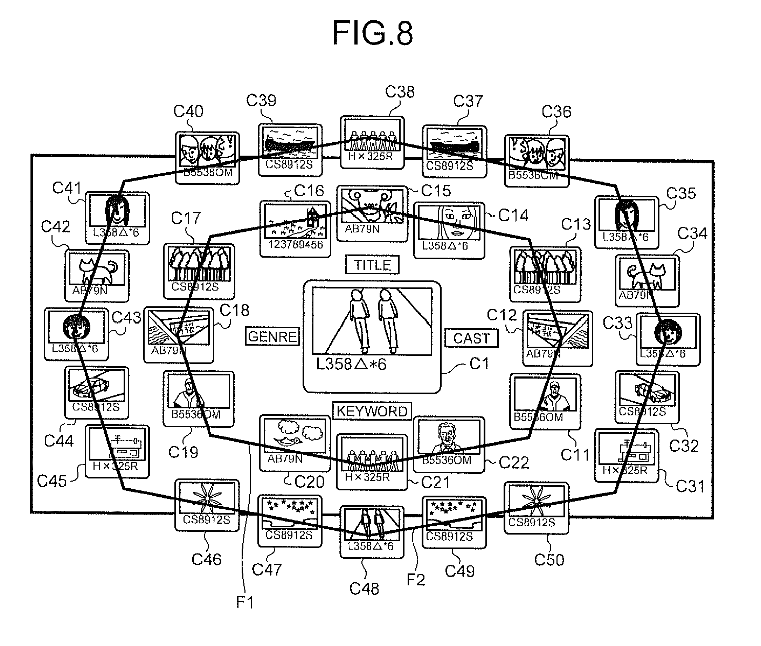

The display module 170 displays a related content list screen (see FIG. 8) for the user to search for content. In the related content list screen, pieces of display information (see FIGS. 6A and 6B) generated by the display information generator 105, which will be described later, are arranged by the display controller 106, which will be described later. The display information is information about content. The display module 170 displays items in the related content list screen (see FIG. 8).

The broadcast receiver 108 receives the content of video (TV program) broadcasted by TV broadcasting through an antenna or a cable (not illustrated).

The video reproducer 107 acquires the content of video that the user desires to reproduce. Examples of the content include the content of a TV program, etc. received by the broadcast receiver 108 and the content of video stored in the recorded program storage module 160. The video reproducer 107 decodes (reproduces) the content thus acquired, and outputs it to the display controller 106.

The operation receiver 101 receives user's operation. More specifically, when the user operates an input device, the operation receiver 101 recognizes the operation and receives an instruction provided by the operation. Examples of the input device include the remote controller 90 provided with operation keys, a keyboard (not illustrated), and a mouse (not illustrated). The user's operation may be pressing an operation key on the remote controller 90, typing on the keyboard, moving the mouse or pressing the mouse button, and the like.

The operation receiver 101 receives the selection of content used as a search reference or key (key content). More specifically, the operation receiver 101 receives the selection of content belonging to a category currently displayed by the display module 170 from among contents currently being broadcasted and to be broadcasted, auto-recorded contents, and PVR contents.

For example, when the user searches for desired content as well as contents related to the desired content from a plurality of contents, he/she selects content (key content) as a search key using the input device from a plurality of contents of the EPG displayed on the display module 170. The operation receiver 101 receives this selection of the key content, specifies the key content as a search key, and also receives an instruction to search for the contents.

The key content need not necessarily be specified according to the user's selection of the key content, and it may be specified from the system. When the display screen of FIG. 5 shifts to the related content list screen, the content 511 selected on the display screen of FIG. 5 may be used as the key content. The key content may also be content being reproduced. In this case, when the user operates the input device while content is being reproduced, the operation receiver 101 receives the user's operation as the selection of the content as the key content, i.e., an instruction to search for contents.

As will be described in detail later, the operation receiver 101 receives an instruction as to display information of focused content in the related content list screen (see FIG. 8) displayed on the display module 170. The related content list screen displays pieces of display information of a plurality of contents. In the related content list screen are arranged key content and other contents highly related to the key content.

The metadata acquiring module 103 acquires, when the operation receiver 101 receives an operation to select key content, metadata of all contents (the key content and other contents than the key content) to be displayed. More specifically, for example, the metadata acquiring module 103 acquires the metadata of the contents from the recorded program storage module 160.

The metadata acquiring module 103 may also acquire the metadata of the contents from the EPG stored in the EPG storage module 150.

The metadata retriever 102 retrieves, when the operation receiver 101 receives an operation to select key content, metadata of the key content from the metadata of the contents acquired by the metadata acquiring module 103. The metadata retriever 102 then outputs the metadata of the key content to the relation calculator 104. The metadata retriever 102 also retrieves, based on the metadata of the key content acquired from the metadata acquiring module 103, metadata of other contents to be the objects of calculation by the relation calculator 104 as to the relation to the key content. The metadata retriever 102 then outputs the metadata of the other contents to the relation calculator 104.

The metadata retriever 102 also outputs, when the operation receiver 101 receives an operation to select key content, the metadata of all the contents acquired by the metadata acquiring module 103 to the display information generator 105.

The relation calculator 104 calculates the relation of each of the other contents to the key content based on the metadata of the key content and the metadata of the other contents received from the metadata retriever 102 with respect to each item. Examples of the item include title and channel. More specifically, the relation calculator 104 calculates relation RM using the following Equation 1:

$$RM = A\sum\nolimits_{n=1}^{N} fa_n(M11(n), M21(n)) \times wa_n \qquad (1)$$

where N represents the total number of metadata items acquirable by the metadata acquiring module 103, M11 represents the metadata of the key content, M21 represents the metadata of any of the other contents, and (n) represents n-th metadata acquired by the metadata acquiring module 103. Further, $fa_n(M11(n), M21(n))$ is a function that returns the relation between the metadata M11(n) and M21(n) as $RM_n$, and $Wa_n$ is a value (n = 1, ..., N) indicating weight.

As described above, although various types of information is acquired as the metadata, the metadata will be described below as a set of five items (N = 5), i.e., recoding date and time, title of content, channel, genre, and cast, for simplicity. The five items of the metadata will be described as n = 1, 2, ..., 5 in the above order.

The relation RM of the other contents with respect to the key content can be represented by the weighted linear sum of the following five relations $RM_1$ to $RM_5$:

$$RM_1 = fa_1(\text{recoding date and time of metadata M11, recoding date and time of metadata M21})$$

$$RM_2 = fa_2(\text{title of metadata M11, title of metadata M21})$$

$$RM_3 = fa_3(\text{channel of metadata M11, channel of metadata M21})$$

$$RM_4 = fa_4(\text{genre of metadata M11, genre of metadata M21})$$

$$RM_5 = fa_5(\text{cast of metadata M11, cast of metadata M21})$$

For example, $fa_1$ is a function that is larger for a smaller difference in recoding date and time between the metadata M11 and M21 and is smaller for a larger difference in the recoding date and time. More specifically, $fa_1$ may be represented by using a relational expression as follows:

$$MO1/|rec\_data(M11) - rec\_data(M21)|$$

where rec_data (x) is a function that uniquely converts the recoding date and time of x into an integer, MO1 is an arbitrary constant number, and |X| is a function indicating the size of X and is typically an absolute value. Specifically, rec_data (x) is a function that converts the recoding date and time into an integer such as seconds having elapsed from a reference date and time determined as 0.

While an example is described above in which a function g represented as g(x) = MO1/|X| is applied to $fa_1$ (M11, M21) = g(rec_data (M11) - rec_data (M21)), it is not so limited. The function g may be a function with L2 norm as, for example, g(x) = MO1/||x||. In this case, ||x|| is the square root of the sum of squares of the differences between elements that constitute x.

Other functions such as a sigmoid function and a gamma function may be applied to g(x). Besides, while an example is described above in which the function is larger as the recoding dates and times of the metadata M11 and M21 are closer, it is not so limited. The function may be smaller as the recoding dates and times of the metadata M11 and M21 are closer. Further, the function g may be large when a specific condition is satisfied.

For example, $fa_2$ is a function that is larger as more of the same letters or characters are contained in the character strings of the titles of the respective metadata M11 and M21. More specifically, if the title of the metadata M11 is "ABCDE" and that of the metadata M11 is "FGCDH", the two same letters "CD" are contained in both the titles. If the title of the metadata M11 is "ABCDE" and that of the metadata M11 is "FGHIE", the one same letter is contained in both the titles. Therefore, the value of $fa_2$ is larger in the former case. The relation may be determined based on a keyword contained in the brief description (subtitle) of a program in the same manner as the title basis.

While an example is cited above in which the number of the same letters or characters contained in both the titles are simply compared, this is not intended as a limitation. Additional conditions may be used such as that the function is larger as more of the same letters or characters are contained in both the titles from the top, or that even if no same letter is present in both the titles, when the titles have a common idea, they are determined to be the same. As an example of the latter case, a Japanese word "yakyu" is regarded as the same as "baseball", and the titles that contain the words "yakyu" and "baseball", respectively, are determined to contain the same character string.

Besides, when the titles have the same main character string and different sub character strings, they are likely to be of contents of the same series. Accordingly, in such a case, the value of $fa_2$ may be set to large. Specifically, for example, "ABCDE #2" and "ABCDE #3" are likely to be the titles of different episodes of the same drama series. Therefore, in such a case, the value of $fa_2$ may be doubled. Note that the above is described by way of example only, and the comparison as described above may be accomplished with high accuracy by commonly known technologies such as approximate pattern matching and regular expression matching.

For example, $fa_3$ is a function that is large when the metadata M11 and M21 are of contents of the same channel. Simply, $fa_3$ may be a function that takes value MO2 when the metadata M11 and M21 are of contents of the same channel and otherwise takes value 0. The value MO2 is an arbitrary constant number. In addition, if the metadata M11 and M21 are of contents of affiliate channels, the value of $fa_3$ may be set to a different value. For example, $fa_3$ may be a function that returns value MO3 when the metadata M11 and M21 are of contents of affiliate channels. Further, $fa_3$ may be a function that returns value MO2/4 if the metadata M11 and M21 are of contents of affiliate channels but of different broadcast media. Note that the above is described by way of example only, and $fa_3$ may be an arbitrary function.

For example, $fa_4$ is a function that is large when the metadata M11 and M21 are of contents of the same genre. More specifically, $fa_4$ may be a function that takes value M03 if the metadata M11 and M21 both belong to the same genre "sports" and otherwise takes value 0. In addition, if the metadata M21 belongs to the sabgenre of the metadata M11 such as, for example, if the metadata M11 belongs to the genre "sports" and the metadata M21 belongs to the genre "baseball", $fa_4$ may be a function that takes value MO3/2. Further, even if the metadata M11 and M21 do not directly belong to the same genre, when they can be categorized in the same genre such as, for example, when the metadata M11 belongs to the genre "baseball" while the metadata M21 belongs to the genre "football" and the both are categorized in sports, $fa_4$ may be a function that takes value MO3/4. Note that the above is described by way of example only, and $fa_4$ may be an arbitrary function.

For example, $fa_5$ is a similar function to $fa_4$. More specifically, if the metadata M11 is of the content featuring "WW, XX, YY" and the metadata M21 is of the content featuring "XX, YY, ZZ", then the same two persons are casted for both the contents. In such a case, $fa_5$ may be a function that takes value $2 \times MO_4$ (MO4: an arbitrary constant number), and it may be a function that takes value 0 if there is no same person casted for both the contents. Besides, the cast may include a group or a member of a group. For example, if a person KK is a member of a group XX, and when the metadata M11 is of the content featuring "VV, WW, XX" and the metadata M21 is of the content featuring "KK, YY, ZZ", the person KK is casted in the content of M11 as a member of the group XX and also is casted in the content of M21. In such a case, $fa_5$ may be a function that returns value MO4/2.

In a similar fashion, the relation between groups or between people featured in the contents may be defined. For example, when the groups XX and YY belong to the same office, $fa_5$ may be a function that returns value M04/4. In this case, the relation between a person and a group or between offices to which a person and a group belong may be defined in the metadata or may be obtained from an external server (information site).

While an example is described above in which the relation is calculated not differentiating people in the cast list, this is not so limited. The relation may further be weighted according to the order on the cast list. For example, the derived relation is left as it is with respect to the first person on the cast list for the metadata M11, while it is weighted by 1/2 with respect to the second person and similarly is weighted by 1/3 with respect to the third person. The order on the cast list for the metadata M21 may also be taken into account in addition to that for the metadata M11. For example, if the second person on the cast list for the metadata M11 is the third person on the cast list for the metadata M21, the relation may be weighted by 1/2 with respect to the second person for the metadata M11 and may further be weighted by 1/3 with respect to the third person for the metadata M21. That is, the relation may be weighted by $1/2 \times 1/3 = 1/6$. Besides, the relation may be weighted differently with respect to a star playing a leading role based on information on the cast or the like. For example, the derived relation may be double-weighted with respect to the star.

The display information generator 105 generates display information representing the details of the key content and the other contents based on the metadata of the key content and that of the other contents output from the metadata retriever 102.

More specifically, for example, based on the metadata of content of video data stored in the recorded program storage module 160, the display information generator 105 adds such items as a title to the representative image of the video data to generate display information to be displayed on the display module 170. Further, for example, based on the EPG stored in the EPG storage module 150, the display information generator 105 generates display information to be displayed on the display module 170 to indicate the title of a TV program, the broadcast date and time, the channel, the brief description (subtitle) of the TV program, and the like.

The display information will be described in detail below. FIGS. 6A and 6B illustrate examples of the display information representing the details of content. FIG. 6A illustrates display information C1 of key content generated based on, for example, the metadata of video data stored in the recorded program storage module 160. As illustrated in FIG. 6A, the display information C1 includes a representative image C1-1 of the content and title C1-2 of the content (video) "L358Δ*6".

On the other hand, FIG. 6B illustrates the display information C1 of the key content generated based on, for example, an EPG. As illustrated in FIG. 6B, the display information C1 includes the channel C1-3, title "hunchtime Comedy Show" with subtitle "Great line up of comedians invite you to enjoy a noon of hilarious entertainment" C1-4 of the content (video), and broadcast date and time C1-5.

The display controller 106 displays content output from the video reproducer 107 on the display module 170. As described above, when the operation receiver 101 receives an instruction from the user to search for content, the display controller 106 displays related content list information indicating a list of display information of key content and that of other contents related to the key content on the display module 170 to allow the user to search for the content.

In the related content list information, the display information of the key content is arranged in a desired position. Further, items used for the calculation of relation are arranged close to the display information of the key content, for example, correspondingly to the directions of operation on an operation key such as an arrow key on the input device such as the remote controller 90. In the embodiment, the items are assigned to the directions of the arrow key (up, down, left and right directions), respectively.

In addition, with the position of the display information of the key content as the center, pieces of the display information of the other contents are arranged to form concentric ellipses or polygons, for example, correspondingly to the directions of operation on an operation key such as the arrow key on the input device such as the remote controller 90 with respect to the items.

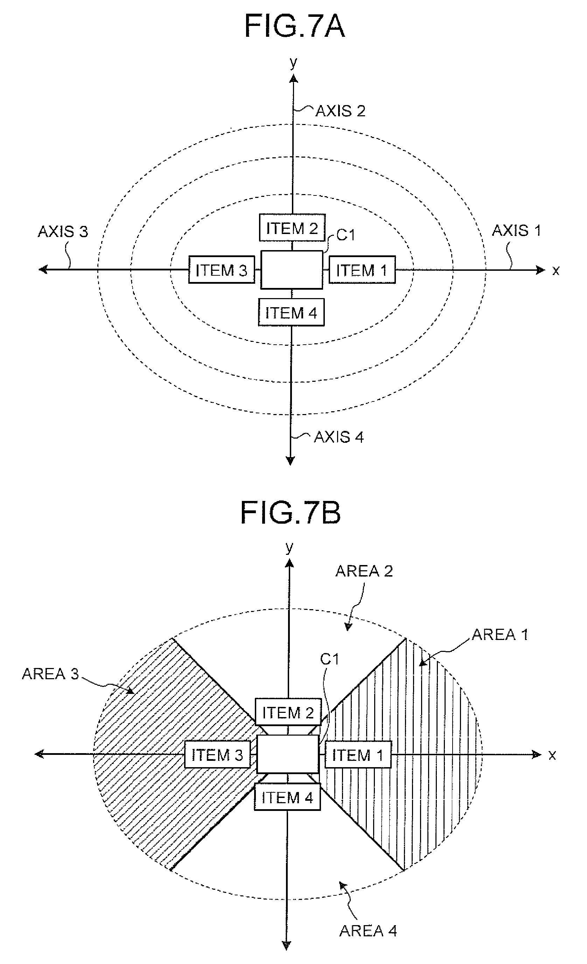

The screen is divided into predetermined areas for the respective items in radial directions from the center. The pieces of the display information of the other contents are arranged in each of the predetermined areas such that the one with higher relation to the key content as to a corresponding item is closer to the center. Besides, in the related content list information, the display information of the key content is displayed in the largest size, and the display information of the other contents is displayed smaller as the distance from the center increases. With reference to FIGS. 7A, 7B, and 8, a description will be given of the operation of arranging and displaying the display information in the related content list information. FIGS. 7A, 7B, and 8 are schematic diagrams for explaining the related content list information.

As illustrated in FIG. 7A, the display controller 106 arranges display information C1 of key content at a desired position. The display controller 106 then sets, using the position of the display information C1 as the center, four axes (axes 1 to 4) in the positive x-axis direction, the positive y-axis direction, the negative x-axis direction, and the negative y-axis direction, respectively, correspondingly to directions that can be instructed through the input device. Thereafter, the display controller 106 arranges each item at a position close to the display information C1 on one of the four axes extending in directions that can be instructed through the input device. That is, the number of the axes and the items corresponds to the directions (four directions) that can be specified by an operation key (arrow key) provided on the input device such as the remote controller 90 to instruct the direction. If the input device such as the remote controller 90 is provided with an arrow key or arrow keys capable of specifying eight directions, i.e., up, down, left, right, upper right, lower right, upper left, and lower left, up to eight axes can be set.

As illustrated in FIG. 7B, the display controller 106 divides the display area into predetermined areas (areas 1 to 4) in radial directions from the display information C1 in the center. The display area is divided at an arbitrary angle, for example, an angle of 90°, such that each of the predetermined areas includes one of the axes. In this manner, the display controller 106 generates the predetermined areas (area 1 to 4) each including one of the axes assigned one of the items.

As illustrated in FIG. 8, the display controller 106 arranges pieces of display information of other contents on a plurality of octagons F1, F2, ... , which are concentrically formed around the display information C1 of the key content as the center, correspondingly to up, down, left, and right directions of the operation key on the remote controller 90. More specifically, the display controller 106 arranges 12 pieces of display information C11 to C22 of other contents on the octagon F1. Further, the display controller 106 arranges 20 pieces of display information C31 to C50 of other contents on the octagon F2.

In the same manner as just described, the display controller 106 arranges a predetermined number of pieces of display information of other contents along the up, down, left, or right directions of operation.

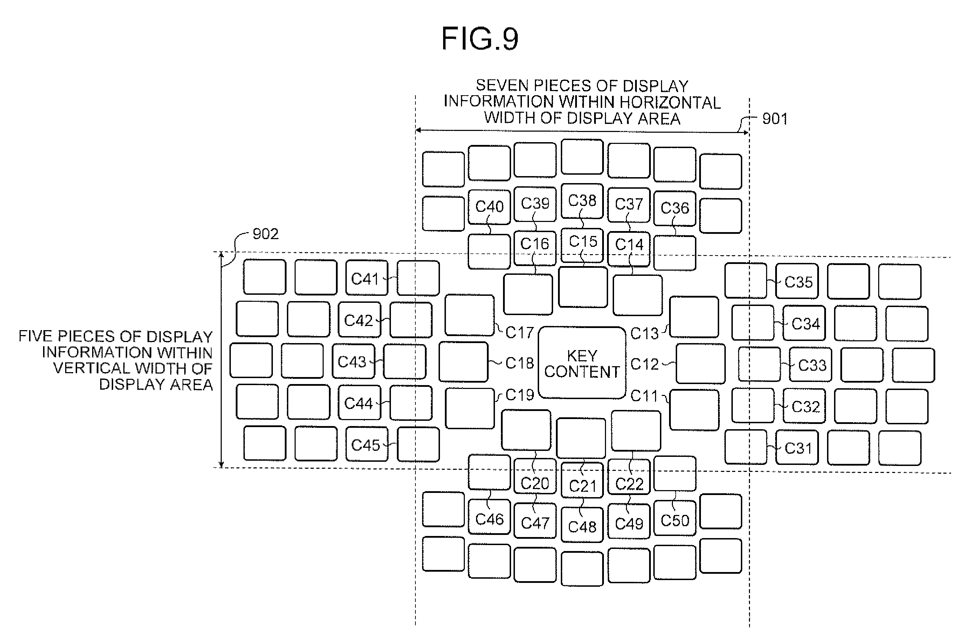

FIG. 9 illustrates an example of pieces of display information of contents arranged in up, down, left, and right directions of operation by the display controller 106. As illustrated in FIG. 9, the display controller 106 arranges and displays pieces of display information of contents within a horizontal width 901 of the display area along the up and down directions of operation. In the embodiment, seven pieces of display information of contents are arranged within the horizontal width 901.

Meanwhile, the display controller 106 arranges and displays pieces of display information of contents within a vertical width 902 of the display area along the left and right directions of operation. In the embodiment, five pieces of display information of contents are arranged within the vertical width 902.

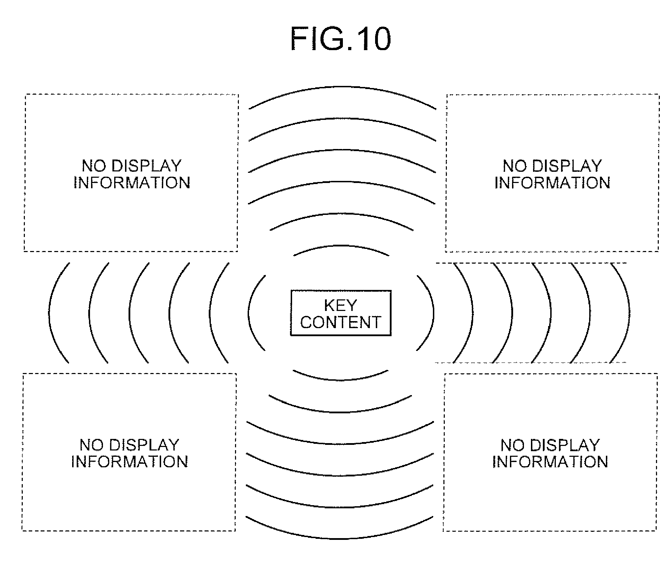

FIG. 10 illustrates reference lines for the display controller 106 to arrange pieces of display information of contents. As illustrated in FIG. 10, the display controller 106 arranges and displays pieces of display information of other contents on ellipses with display information of key content at the center. Pieces of display information of other contents at a predetermined distance from the center is arranged arcs having the same curvature, and the same number of pieces of display information of contents are arranged on the arcs, respectively. Further, as illustrated in FIG. 10, display information of other contents are not displayed in diagonal areas.

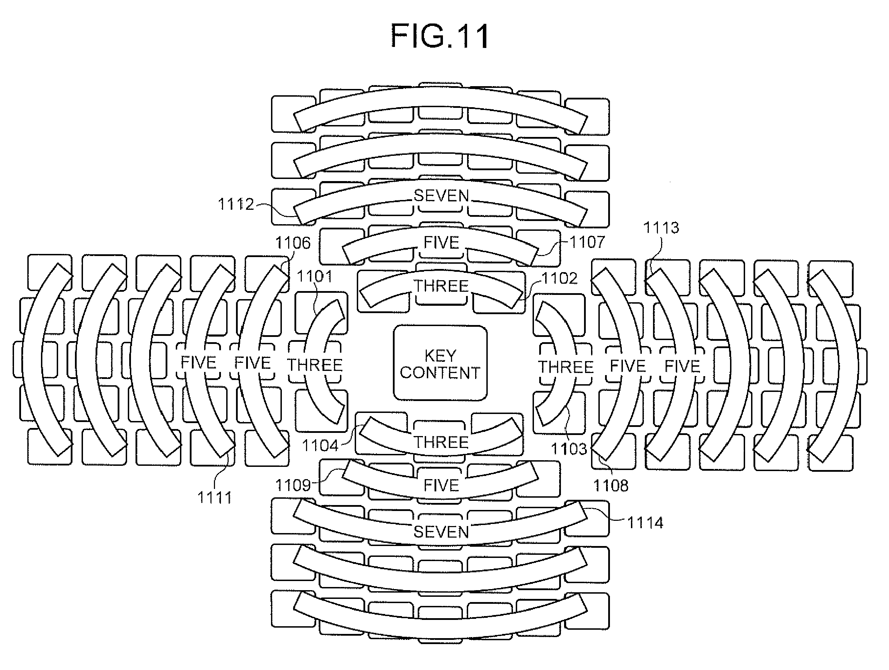

More specifically, the display controller 106 arranges pieces of display information of contents as illustrated in FIG. 11 and displays them. That is, pieces of display information of contents with high relation with respect to one of the items are arranged within the horizontal width 901 or the vertical width 902 and no display information is arranged in the diagonal areas.

If display information of contents is arranged in the diagonal areas, up, down, left, and right operation is required of the user to refer to display information of contents for the respective items. Thus, with the remote controller 90, operation to search for desired content is cumbersome. The digital TV display device 100 of the embodiment allows the user to refer to content with high relation with respect to each of the items by only up and down or left and right operation for each of the items. This facilitates the operation with the remote controller 90.

As illustrated in FIG. 11, the display controller 106 arranges the display information C1 of the key content at the center. The display controller 106 arranges arrays 1101, 1102, 1103, and 1104 each formed of three pieces of display information of other contents on the innermost ellipse. The display controller 106 arranges arrays 1106, 1107, 1108, and 1109 each formed of five pieces of display information of other contents on the second innermost ellipse. Further, the display controller 106 arranges upper and lower arrays 1112 and 1114 each formed of seven pieces of display information of other contents as well as left and right arrays 1111 and 1113 each formed of five pieces of display information on the next ellipse. Afterward, the display controller 106 arranges upper and lower arrays of seven pieces of display information and left and right arrays of five pieces of display information in a manner as described above.

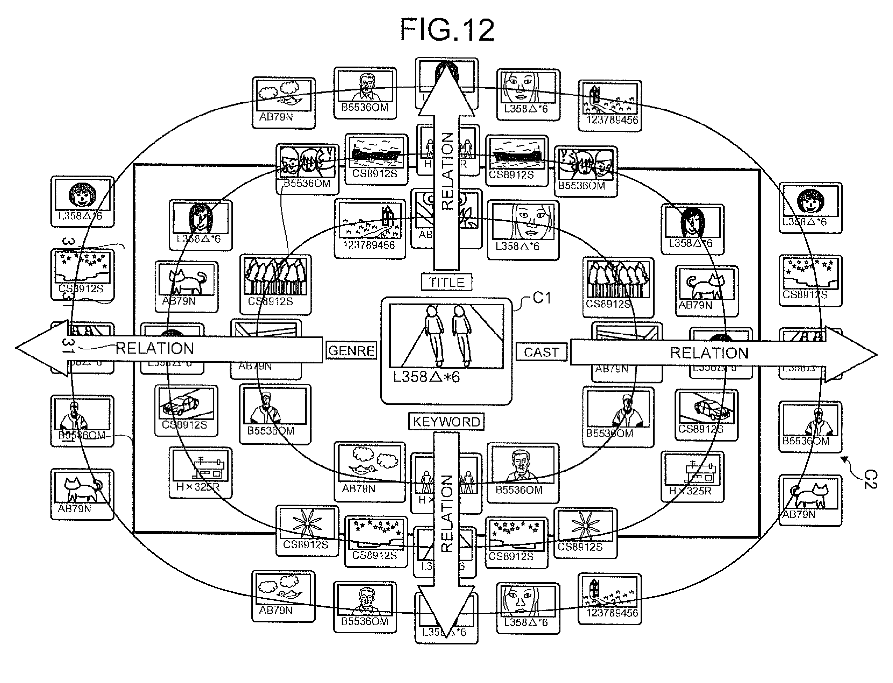

Besides, as illustrated in FIG. 12, the display controller 106 arranges pieces of display information of other contents in descending order of relation to the key content from around the center at which is arranged the display information C1 of the key content toward the outside for each of the items. In other words, in the example of FIG. 11, the display controller 106 arranges pieces of display information of other contents with the highest relation to the key content as the arrays 1101, 1102, 1103, and 1104 on the innermost ellipse. The display controller 106 also arranges pieces of display information of other contents as the arrays 1106, 1107, 1108, and 1109 on the second innermost ellipse, and the arrays 1111, 1112, 1113, and 1114 on the next ellipse, from inner to outer ellipse in descending order of relation to the key content.

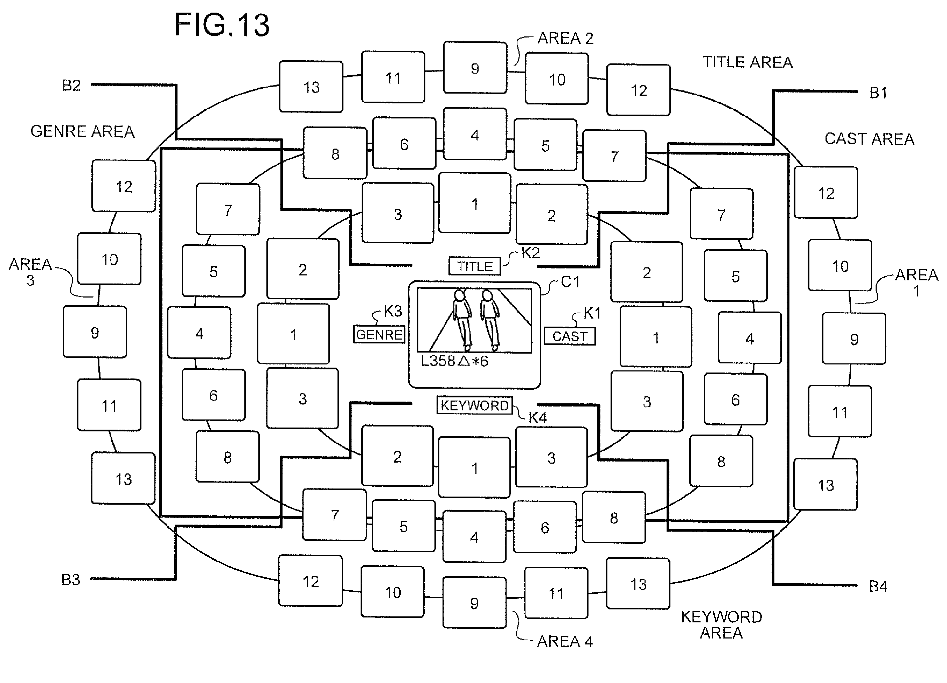

In addition, the display controller 106 arranges pieces of display information of other contents in descending order of relation to the key content in each of the display areas (areas 1 to 4) corresponding to each of the items (items K1 to K4). More specifically, as illustrated in FIG. 13, the display controller 106 assigns the area 1 defined by boundary lines B1 and B4 to the item K1, the area 2 defined by boundary lines B1 and B2 to the item K2, the area 3 defined by boundary lines B2 and B3 to the item K3, and the area 4 defined by boundary lines B3 and B4 to the item K4. The display controller 106 provides a space between the areas so that the items can be clearly differentiated. The display controller 106 arranges pieces of display information of other contents in the order of numbers assigned to the pieces illustrated in FIG. 13. Thus, with respect to each of the items, the pieces of the display information of the other contents can be arranged in each area in descending order of relation to the key content.

Basically, human has a tendency to recognize horizontal scrolling easier than vertical scrolling with eyes. In other words, it is easier to view display information of contents with high relation with respect to the items K1 and K3 than that with respect to the items K2 and K4. Accordingly, the display controller 106 of the embodiment sets the items K1 and K3 corresponding to the horizontal scrolling to have higher priority than the items K2 and K4 corresponding to the vertical scrolling. That is, the display controller 106 of the embodiment assigns "Cast" and "Genre" to the items K1 and K3, respectively, as items with higher priority that the user more frequently refers to than "Title" and "Keyword", and displays them. With this, the user can more easily refer to display information of contents with high relation with respect to the items K1 and K3 that he/she more frequently refers to.

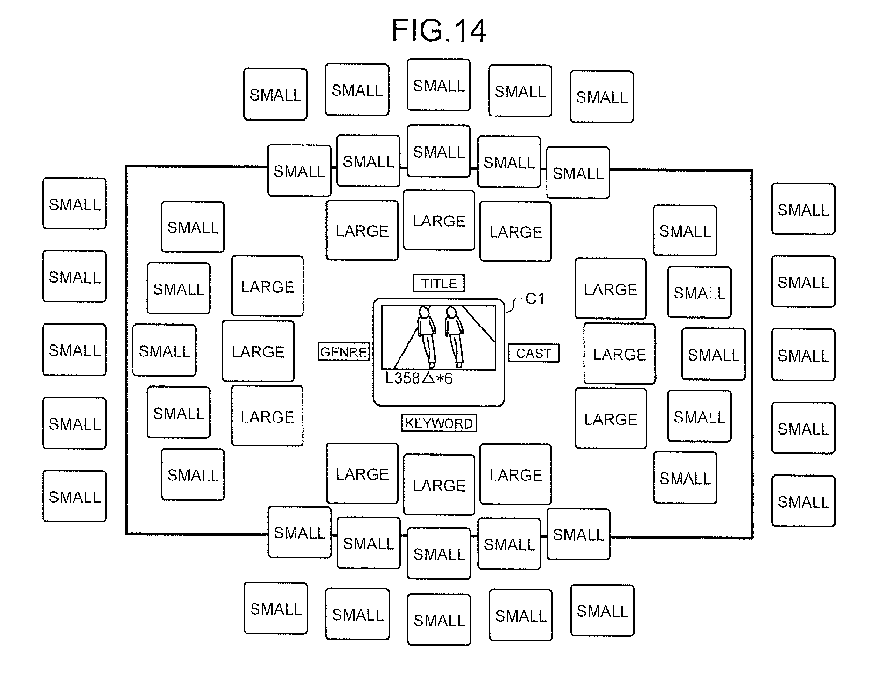

Further, as illustrated in FIG. 14, the display controller 106 displays the display information of the key content in the largest size, and the display information of other contents smaller as the distance from the center increases. Incidentally, the display controller 106 stores in advance the display position and size of the display information. After the calculation of the relation to the key content, the display controller 106 sequentially arranges pieces of the display information of the other contents each in a predetermined size.

In this manner, the display controller 106 generates related content list information in which are arranged the display information C1 of the key content and the display information C11, ... of the other contents, and displays the related content list information on the display module 170.

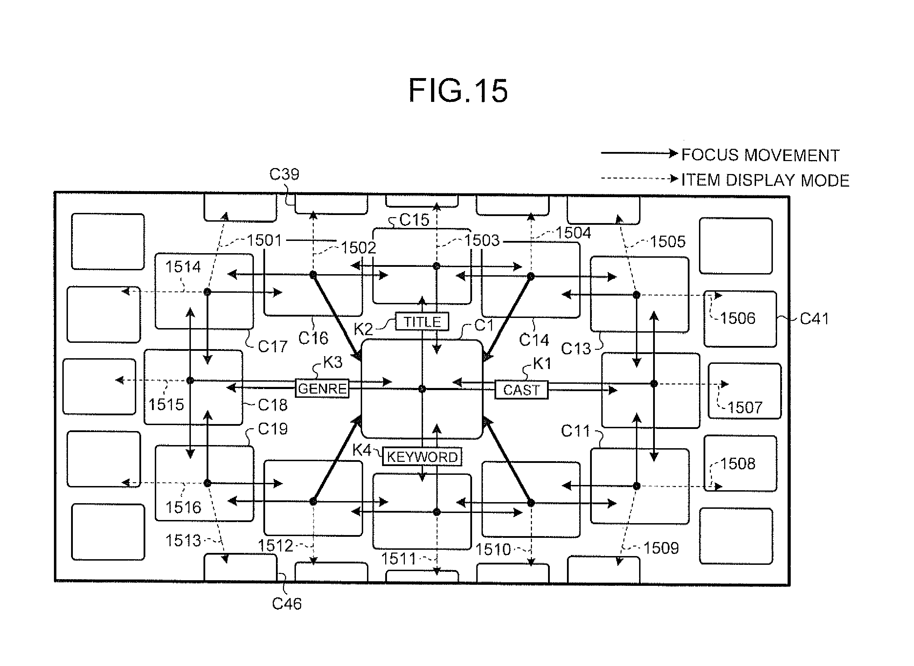

FIG. 15 illustrates an example of the related content list information in which are arranged the display information C1 of the key content and the display information C11, ... of the other contents. In the related content list information of FIG. 15, the items K1 to K4 are displayed at positions close to the display information C1 of the key content. In the example of FIG. 15, "Cast", "Title", "Genre" and "Keyword" are assigned to the items K1 to K4, respectively. With the display information C1 of the key content as the center, pieces of the display information of the other contents are arranged from around the center toward the outside.

As described above, in the embodiment, pieces of display information of other contents than key content are arranged along up, down, left, and right directions of operation. Therefore, in response to operation of up, down, left, and right directions, focused content changes as indicated by arrows illustrated for display information of respective contents in FIG. 15. For example, if the display information C17 represents focused content in search, upon receipt of an instruction for rightward movement through the operation key on the remote controller 90 or the keyboard, the focus moves from the display information C17 through C16, C15, C14, C13, to C41. Similarly, if the display information C17 represents focused content in search, upon receipt of an instruction for downward movement through the operation key on the remote controller 90 or the keyboard, the focus moves from the display information C17 through C18, C19 to C46.

Additionally, for example, if the cursor moves one space to the right in response to an instruction when the display information C16 represents focused content, the focus moves to the display information C16. Similarly, if the cursor moves one space in the up, left, or down direction in response to an instruction, the focus moves to the display information C39, C17, or C1. Thus, the operation using the operation key such as an arrow key on the remote controller 90 or the keyboard can be facilitated.

With reference to FIG. 15, a description will be given of operation to select one of the items. As described above, the axes and the items are provided in the number specifiable by the arrow key on the input device, and the items K1 to K4 are arranged close to the display information C1 of the key content each on one of the axes. When the cursor is placed on the position of the display information C1 and the arrow key is manipulated upward once on the input device, the cursor moves to the display information C15 through the item K2 "title" arranged above the display information C1 of the key content. That is, by manipulating the arrow key on the input device, the user can move the cursor from the display information C1 of the key content to that of another content.

Meanwhile, when the arrow key is manipulated to move the focus to display information of another content on the outermost ellipse (as indicated by arrows 1501 to 1516), the display controller 106 of the embodiment changes the display mode to display display information of contents belonging to the item that the newly focused content belongs to.

With the operation key, the user can select content belonging to each item assigned to each axis. Incidentally, the user may set an item assigned to each axis. In the embodiment, while "Title", "Genre", "Cast", and "Keyword" are cited as examples of the items, broadcast station, broadcast date and time, and the like may be set as items. The user is allowed to arrange desired items at desired locations so that he/she can easily view them and perform operation. Thus, it is possible to increase the convenience for the user.

The digital TV display device 100 of the embodiment is provided with two types of display modes, i.e., full display mode and item display mode, for the display controller 106 to display the related content list screen.

In the full display mode, display information of other contents is displayed for all the items with the display information C1 of the key content as the center. The screen can be scrolled in any directions assigned to the items.

The display controller 106 displays on the display module 170 the related content list screen as illustrated in FIG. 8. On the related content list screen, display information of contents with high relation to the key content are arranged in display areas each located in a direction assigned to one of the items based on the position of the display information C1 of the key content as a reference position.

In the item display mode, display information of other contents with high relation to the key content for one of the items is displayed with the display information C1 of the key content. The screen can be scrolled in a direction assigned to the item and the opposite direction.

The display mode is switched from the full display mode to the item display mode when the operation receiver 101 receives a specific instruction. The specific instruction may be provided by moving the focus to display information of content located at an outermost position in a direction (for example, the positive x-axis direction) assigned to one of the items on the display areas displayed on the display module 170. The specific instruction may also be provided by selecting one of the items (K1 to K4). Alternatively, as a modification of the embodiment, the specific instruction may be provided by moving the focus further outward from display information of content located at an outermost position in a direction assigned to one of the items.

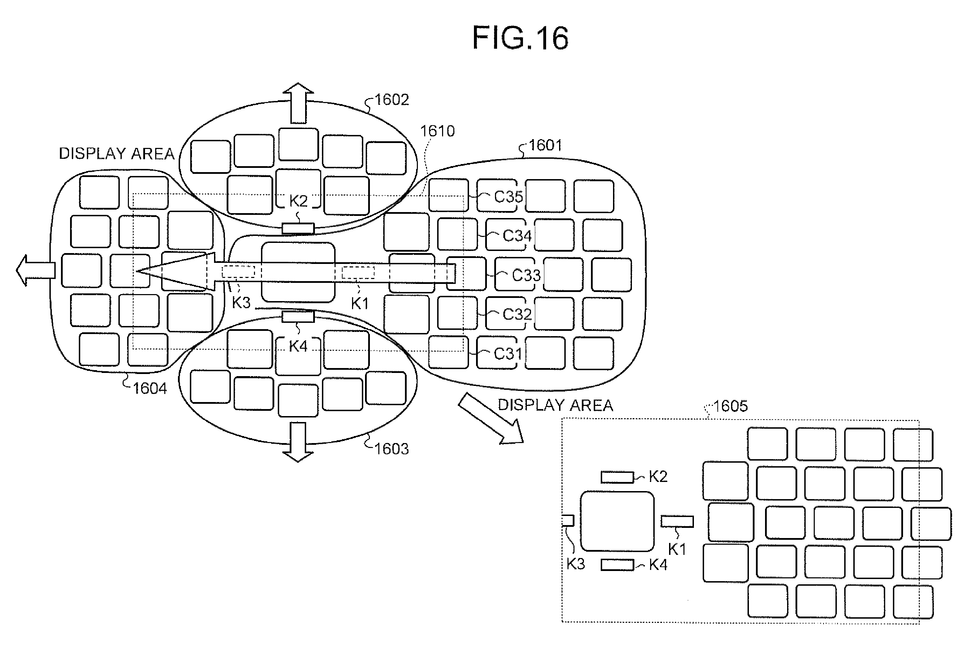

FIG. 16 illustrates an example of a screen transition when the display mode is switched to the item display mode in response to a specific instruction received by the operation receiver 101. In the example of FIG. 16, the display controller 106 switches the display mode to the item display mode to provide a display related to the item K1 when the operation receiver 101 receives an instruction to move the focus to display information of content (C31, C32, C33, C34, or C35). Accordingly, the display controller 106 displays display information of key content and a display information group 1601 of contents with high relation to the key content with respect to the item K1 within a display area 1610. At this time, the display controller 106 moves a display information group 1604 of contents with high relation to the key content with respect to the item K3 to the outside of the display area 1610 from left side so that the display information group 1604 is not displayed. Similarly, the display controller 106 moves display information groups 1602 and 1603 of contents with high relation to the key content with respect to the item K2 and K4, respectively, to the outside of the display area 1610 so that the display information groups 1602 and 1603 are not displayed.

After moving the display information groups, the display controller 106 displays the related content list screen in the item display mode as indicated in a display area 1605. The related content list screen in the item display mode will be described specifically later.

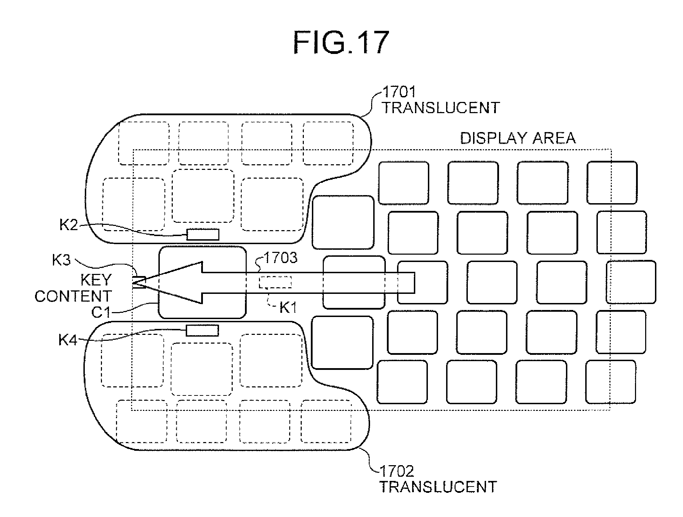

The screen transition when the full display mode is switched to the item display mode is not limited to the example as illustrated in FIG. 16. In the following, another example of the screen transition will be described. FIG. 17 illustrates another example of a screen transition when the full display mode is switched to the item display mode in response to a specific instruction received by the operation receiver 101. As illustrated in FIG. 17, the display controller displays display information groups 1701 and 1702 of contents with high relation to the key content with respect to the item K2 and K4, respectively, in a translucent manner. The display controller displays display information of other contents in a manner as described above. Note that the screen transition is not limited to the examples as illustrated in FIGS. 16 and 17, but may be performed in various manners.

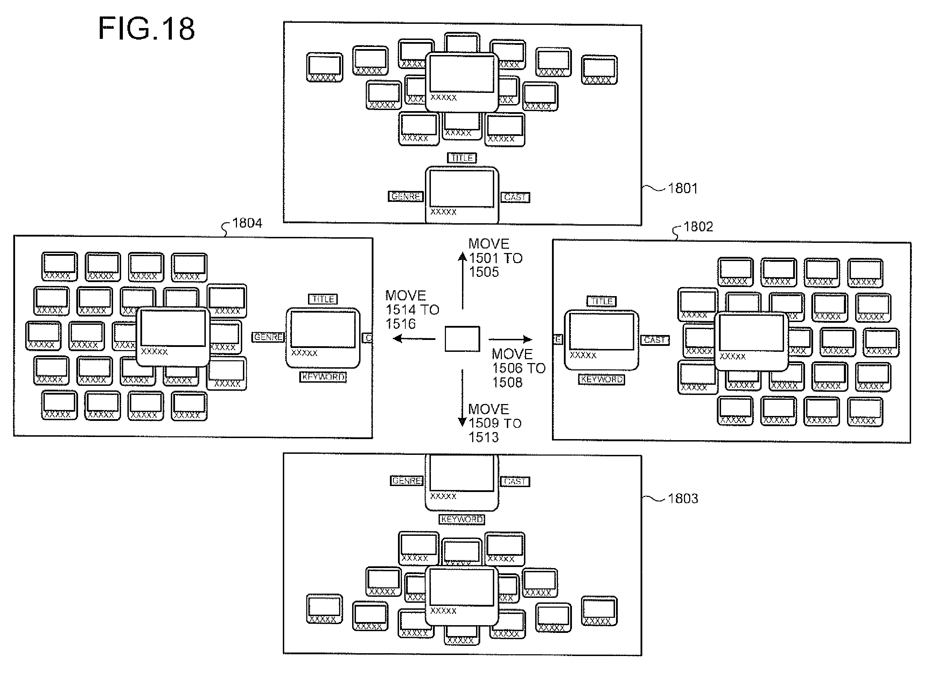

The display controller 106 is capable of switching the display mode to the item display mode with respect to each of the items. FIG. 18 illustrates an example of a screen displayed in the item display mode for each of the items. As illustrated in FIG. 18, when the focus is moved as indicated by arrows 1501, 1502, 1503, 1504, or 1505 in FIG. 15, the display controller 106 displays a screen 1801 that displays display information of contents with high relation to the key content with respect to the item K2 in the item display mode.

Similarly, when the focus is moved as indicated by arrows 1506, 1507, or 1508, the display controller 106 displays a screen 1802 that displays display information of contents with high relation to the key content with respect to the item K1 in the item display mode. When the focus is moved as indicated by arrows 1509, 1510, 1511, 1512, or 1513, the display controller 106 displays a screen 1803 that displays display information of contents with high relation to the key content with respect to the item K4 in the item display mode. Further, when the focus is moved as indicated by arrows 1514, 1515, or 1516, the display controller 106 displays a screen 1804 that displays display information of contents with high relation to the key content with respect to the item K3 in the item display mode.

In this manner, if display information of content located at an outermost position in the display area is selected in the full display mode, the related content list screen is displayed in the item display mode regarding one of the items that the content belongs to.

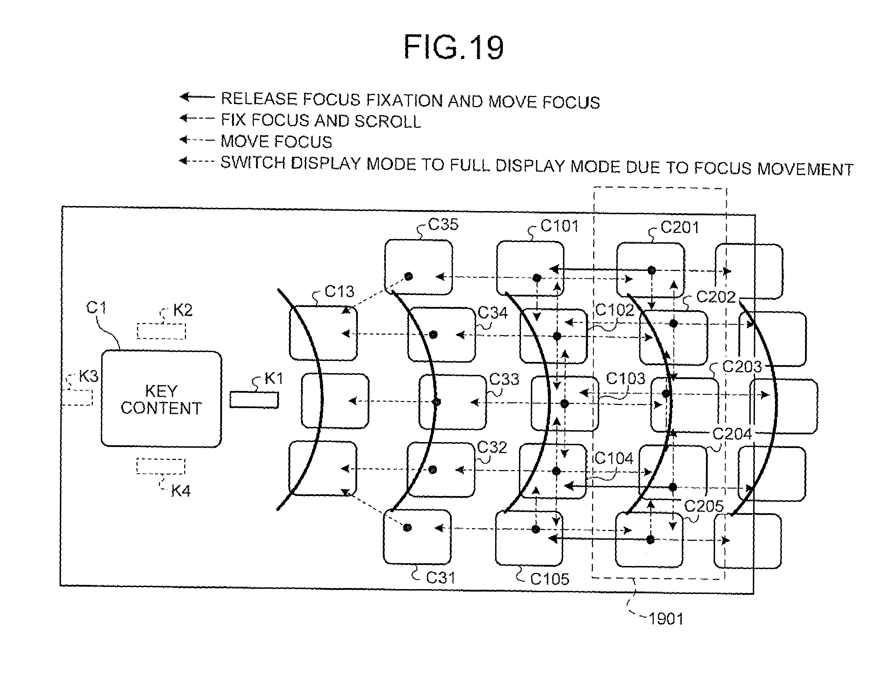

FIG. 19 illustrates an example of the related content list screen displayed by the display controller 106 in the item display mode. In the example of FIG. 19, except for display information of contents belonging to the item K1 as a current display object, the display controller 106 displays display information of contents (contents belonging to the items K2 to K4) in a translucent manner. The display controller 106 arranges pieces of the display information of the contents in arcs so that the user can recognize that the pieces of the display information are arranged around the display information C1 of the key content at the center. The second innermost arc and outer arcs have the same curvature. Thus, pieces of display information of contents other than key content can be displayed regardless of their number.

In the example of FIG. 19, each time the operation receiver 101 receives an instruction through the arrow key on the remote controller 90, the display controller 106 moves the focus from display information of one content to another (for example, as indicated by arrows illustrated with display information C101 to C105 and C201 to C205). For example, when the operation receiver 101 receives an instruction to move the focus from any of the display information C201 to C205 rightward (in the direction indicated by dashed-dotted arrows), the display controller 106 moves display information of all contents so that display information of newly focused content is displayed in an area 1901. In the area 1901, display information of contents on the second outermost ellipse is displayed. Therefore, it is easier to determine whether there is display information of content arranged further outside (on the outermost ellipse). In addition, this makes it easier to determine whether to move the focus further outward, and thereby the operability is improved.

Besides, when the operation receiver 101 receives an instruction to move the focus from any of the display information C201 to C205 leftward (in the direction indicated by solid arrows), the display controller 106 releases the focus fixed on the display information of content in the area 1901 and moves the focus. When the operation receiver 101 receives an instruction to move the focus from any of the display information C31 to C35 leftward (in the direction indicated by dotted arrows), the display controller 106 switches the display mode from the item display mode to the full display mode and displays the related content list screen. When the operation receiver 101 receives other instructions through the arrow key (indicated by dashed-two-dotted arrows), the display controller 106 moves the focus as usual.

In this manner, when the operation receiver 101 receives a specific instruction while the display controller 106 provides a display in the item display mode, the display controller 106 displays the related content list screen again in the full display mode. The specific instruction to switch the display mode back to the full display mode may be provided by moving the focus on, among pieces of display information of contents arranged to form ellipses around display information of key content at the center, display information on the second innermost ellipse (for example, the display information C31 to C35) to display information on the innermost ellipse. The specific instruction may also be provided by pressing a specific key such as "Return" key on the remote controller 90.

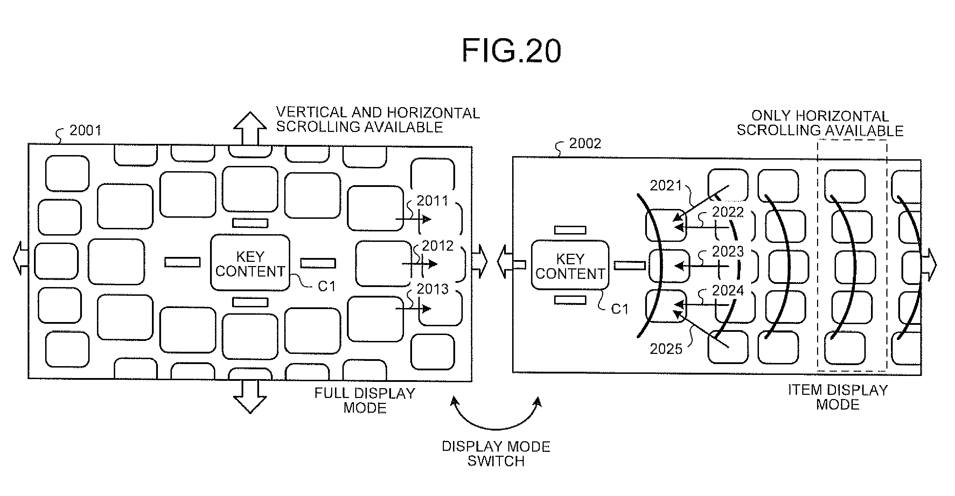

FIG. 20 is a schematic diagram for explaining the operation of the display controller 106 to switch the display mode between the full display mode and the item display mode. As illustrated in FIG. 20, the display controller 106 is capable of scrolling a display screen 2001 in the full display mode vertically and horizontally. When the operation receiver 101 receives an instruction to move the focus in the direction indicated by arrows 2011 to 2013, the display controller 106 switches the display screen 2001 to a display screen 2002 in the item display mode. The display screen 2002 can be scrolled only in a direction assigned to corresponding one of the items and the opposite direction (left and right directions).

On the other hand, when the operation receiver 101 receives an instruction to move the focus in the direction indicated by arrows 2021 to 2025 on the display screen 2002 in the item display mode, the display controller 106 switches the display screen 2002 to the display screen 2001 in the full display mode. At this screen transition, the process previously described in connection with FIG. 16 is reversely performed.

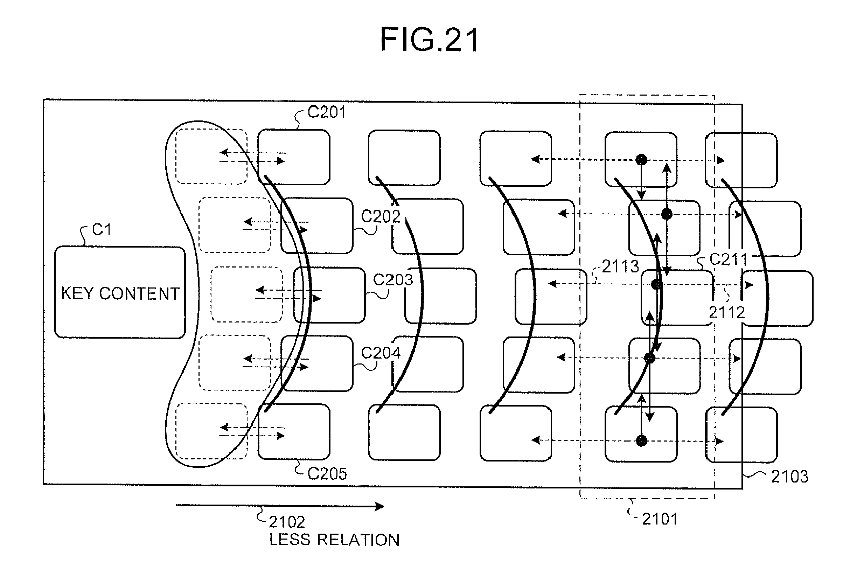

A description will then be given of a screen transition when the focus is further moved in a direction assigned to one of the items in the item display mode. FIG. 21 illustrates an example of a screen transition when the focus moves on the related content list screen displayed by the display controller 106 in the item display mode. In the example of FIG. 21, when the operation receiver 101 receives an instruction to move the focus in a direction assigned to one of the items (in a direction 2102 in which the relation to key content reduces), the focus can be moved to a certain extent but fixed in an area 2101, and only display information of contents and the item are moved on the screen.

For example, if the operation receiver 101 receives an instruction to move the focus in a direction indicated by arrow 2112 (right) when the focus is on display information C211, the display controller 106 moves display information of all contents displayed in a display area 2103 except for the display information C1 of the key content in a direction opposite the direction indicated by arrow 2112 (left) by a distance corresponding to one piece of display information. As a result, pieces of the display information C201 to C205 overlap with the display information C1 of the key content. Therefore, the display controller 106 renders the pieces of the display information C201 to C205 overlapping with the display information C1 transparent so that they are not displayed.

Besides, if the operation receiver 101 receives an instruction to move the focus in a direction indicated by arrow 2113 (left) when the focus is on the display information C211, the display controller 106 moves the display information of all the contents displayed in the display area 2103 except for the display information C1 of the key content in a direction opposite the direction indicated by arrow 2113 (right) by the distance corresponding to one piece of display information. At this time, the display controller 106 resumes the pieces of the display information C201 to C205 that have not been displayed by the above process from the transparent state to the ordinary state and displays them at their original positions while moving the display information rightward. The display information C1 of the key content is always displayed. With this, the user can recognize that the current related content list screen is displayed based on the key content as a reference.

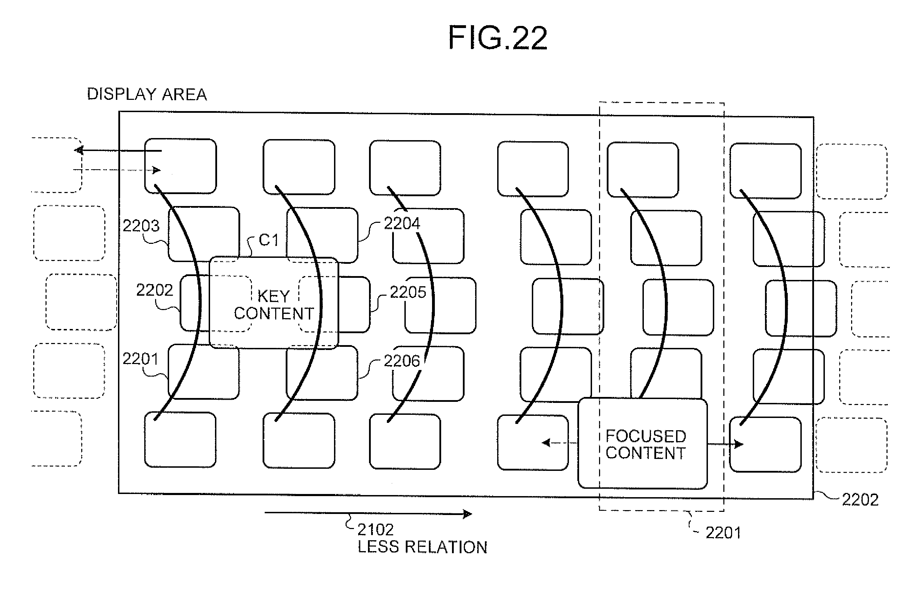

While display information of other content overlapping with that of key content is described above as being rendered transparent and not displayed, it is not so limited. For example, if display information of other contents overlaps with the display information C1 of key content that is always displayed, the display information C1 may be displayed translucently so that the display information of the other contents can be seen. FIG. 22 illustrates another example of a screen transition when the focus moves on the related content list screen displayed by the display controller 106 in the item display mode. In the example of FIG. 22, when the operation receiver 101 receives an instruction to move the focus in a direction assigned to one of the items (in the direction 2102 in which the relation to key content reduces), the focus can be moved to a certain extent but fixed in an area 2201, and only display information of contents and the item are moved on the screen. When the focus is moved to another content, the display controller 106 operates as previously described in connection with FIG. 21.

As a result, if pieces of display information C2201 to C2206 overlap with the display information C1 of the key content, the display controller 106 displays the display information C1 translucently. That is, the display controller 106 displays the display information C1 translucently so that the user regards the display information C1 as being overlaid on the pieces of the display information C2201 to C2206. This indicates that the display information C1 of the key content is displayed preferentially over the display information of other contents. Note that the above is described by way of example only and not in any limitative sense. For example, part of display information of another content overlapping with the display information C1 of the key content may not be displayed.

When the operation receiver 101 receives an instruction to move the focus to another content at an outermost position, the display controller 106 moves display information of other contents leftward by an array of pieces of display information. The display controller 106 does not display display information moved outside a display area 2202.

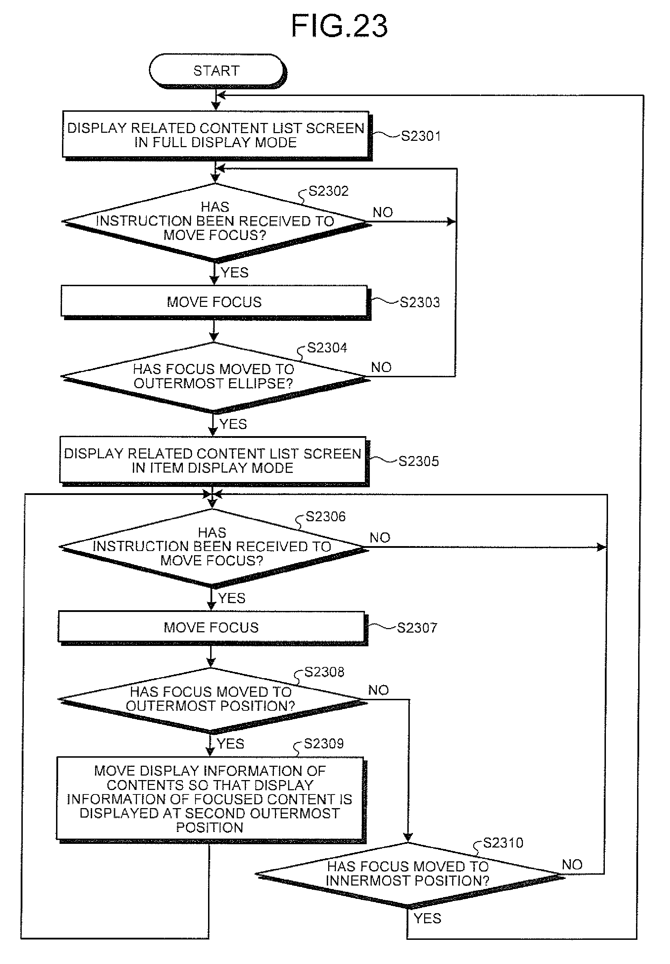

In the following, a description will be given of the operation of the digital TV display device 100 to switch the display mode of the related content list screen. FIG. 23 is a flowchart of the operation of the digital TV display device 100 to switch the display mode of the related content list screen.

First, the display controller 106 displays a related content list screen in the full display mode (S2301). The operation receiver 101 determines whether an instruction has been received to move the focus to one of pieces of display information of contents on the related content list screen displayed in the full display mode (S2302). If such an instruction has not been received (No at S2302), the process of S2302 is repeated.

On the other hand, if the operation receiver 101 determines that an instruction has been received to move the focus (Yes at S2302), the display controller 106 moves the focus to the one of the pieces of the display information of the contents (S2303). The display controller 106 then determines whether the focus has moved to display information of content on the outermost ellipse among the pieces of the display information of the contents arranged in ellipses around display information of key content at the center on the related content list screen (S2304). If the display controller 106 determines that the focus has not moved to display information of content on the outermost ellipse (No at S2304), the process returns to S2302.

On the other hand, having determined that the focus has moved to display information of content on the outermost ellipse (Yes at S2304), the display controller 106 displays the related content list screen in the item display mode with respect to an item assigned to the direction in which the display information of the focused content is located (S2305).

Thereafter, the operation receiver 101 determines whether an instruction has been received to move the focus to one of pieces of display information of contents on the related content list screen displayed in the item display mode (S2306). If such an instruction has not been received (No at S2306), the process of S2306 is repeated.

On the other hand, if the operation receiver 101 determines that an instruction has been received to move the focus (Yes at S2306), the display controller 106 moves the focus to the one of the pieces of the display information of the contents (S2307). The display controller 106 then determines whether the focus has moved to display information of content at an outermost position in the direction of the item in the display area of the related content list screen (S2308).

Having determined that the focus has moved to display information of content at an outermost position (Yes at S2308), the display controller 106 moves display information of all contents other than the key content so that the display information of the focused content is displayed at an second outermost position (S2309). At this time, the screen transitions as illustrated in FIG. 16.

On the other hand, having determined that the focus has not moved to display information of content at an outermost position (No at S2308), the display controller 106 determines whether the focus has moved to display information of content at an innermost position (S2310). If the focus has not moved to display information of content at an innermost position (No at S2310), the process returns to S2306.

On the other hand, having determined that the focus has moved to display information of content at an innermost position (Yes at S2310), the display controller 106 switches the display mode from the item display mode to the full display mode and displays the related content list screen (S2301).

By the process as described above, the digital TV display device 100 switches the display mode of the related content list screen between the item display mode and the full display mode based on user's operation. Thus, an appropriate display is provided for user's operation.

According to the embodiment, the display controller 106 does not display display information of other contents in areas in diagonal directions with respect to the display information C1 of the key content as the center. With this, in the item display mode, it is not necessary to scroll the screen vertically from a direction assigned to each item.

That is, there is no need of scrolling the screen in diagonal directions by vertical scrolling and scrolling in a direction assigned to each item. Thus, even the user who is not accustomed to diagonal scrolling or feels sick by diagonal scrolling can comfortably use the related content list screen.

It is a common demand that the TV display device can be controlled with a simple operation. In view of this, the digital TV display device 100 of the embodiment eliminates user's need to scroll the screen in diagonal directions while the user is viewing related contents. This limitation to screen scrolling facilitates the operation. Thus, it is possible to increase the operability of even a portable input device, which is provided with a limited number of keys and operating ways to achieve a simple operation, such as the remote controller 90.

According to the embodiment, the digital TV display device 100 displays the related content list screen while switching the display mode between the item display mode and the full display mode. The screen can be scrolled vertically and horizontally in the full display mode, while the screen can be scrolled only in a direction assigned to each item and the opposite direction. This facilitates the operation while the screen is displayed.

The display controller 106 of the digital TV display device 100 displays the items each above below right or left of display information of key content at the center. Further, the display controller 106 arranges the items "Cast" and "Genre" on the right and left of the display information of the key content. This is because these items are referred to more frequently by the user than the other two, and a human may recognize horizontal scrolling easier with eyes without an uncomfortable feeling. Thus, the user can more easily search for related content.

The digital TV display device 100 may be provided with a controller that, when the user sequentially specifies four items that he/she considers as having a high priority, assigns the items to right, left, down, and up directions, respectively. This enables the use to view display information of contents with respect to the items that he/she considers as having a high priority without an uncomfortable feeling upon scrolling the screen.

The embodiment described above is susceptible to several modifications and variations.

For example, in the digital TV display device 100 of the above embodiment, the display area of the display module 170 is described as having a horizontal to vertical ratio of 16:9. However, the display processing apparatus is not limited to the digital TV display device and may be any device such as a personal computer (PC). In such a case, the horizontal to vertical ratio of the display device in not limited to 16:9, and may be adjusted appropriately according to the resolution or the size of the display area, and further, the size of a window displayed in the display area. In the following, the case will be described, as a modification of the embodiment, where a PC displays a related content list screen in a window displayed in the display area.

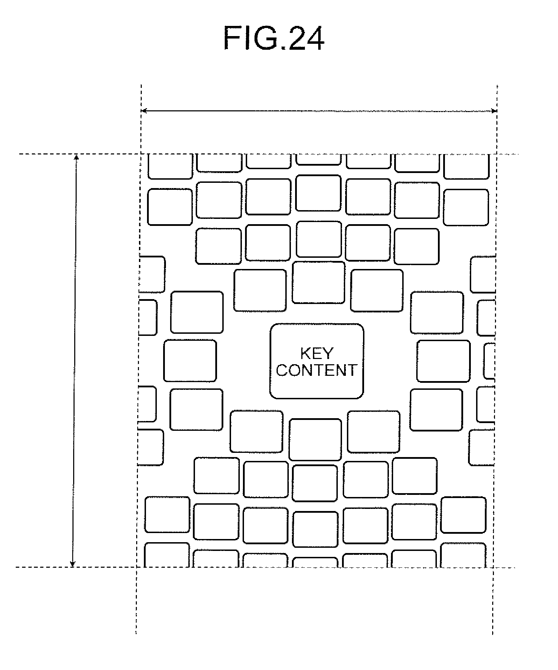

FIG. 24 illustrates an example of a related content list information displayed by a display device such as a PC in the full display mode. In the example of FIG. 24, related content list information is displayed in a vertically long window. In this manner, related content list information is displayed regardless of the horizontal to vertical ratio of a window.

According to the modification, the full display mode is switched to the item display mode when, in the display area of the window illustrated in FIG. 24, display information of content at an outermost position in the display area is selected from display information of other contents arranged in ellipses around display information of key content at the center. The screen transition and display after the screen transition are performed in the same manner as previously described in the above embodiment. Besides, the display mode is switched from the item display mode to the full display mode when the focus is moved to display information of other content at an innermost position as in the above embodiment.

The related content list screen can be displayed regardless of the size and the horizontal to vertical ratio thereof, and also the display mode can be switched between the full display mode and the item display mode.

As described above, according to the embodiment and the modification thereof, a related content list screen can be displayed similarly regardless of the size and the horizontal to vertical ratio thereof, and the same operation can be applied. Accordingly, the operation can be simplified irrespectively of type of device.

The computer program (hereinafter, "display processing program") may be executed on a computer to realize the same function as the digital TV display device 100. The display processing program may be provided to the computer as being stored in a computer-readable storage medium, such as a compact disc-read only memory (CD-ROM), a flexible disk (FD), a compact disc recordable (CD-R), and a digital versatile disc (DVD), as a file in an installable or executable format.

The display processing program may also be stored in a computer connected via a network such as the Internet so that it can be downloaded therefrom via the network. The display processing program may also be provide or distributed via a network such as the Internet.

The display processing program may also be provided as being stored in advance in ROM or the like. The display processing program comprises modules that implement the above constituent elements (the operation receiver 101, the metadata retriever 102, the metadata acquiring module 103, the relation calculator 104, the display information generator 105, the display controller 106, the video reproducer 107, and the broadcast receiver 108). As real hardware, the CPU (processor) loads the display processing program from the storage medium as described above into the main memory and executes it. With this, the constituent elements, such as the operation receiver 101, the metadata retriever 102, the metadata acquiring module 103, the relation calculator 104, the display information generator 105, the display controller 106, the video reproducer 107, and the broadcast receiver 108, may be implemented on the main memory.

The various modules of the systems described herein can be implemented as software applications, hardware and/or software modules, or components on one or more computers, such as servers. While the various modules are illustrated separately, they may share some or all of the same underlying logic or code.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A display processing apparatus comprising:

a relation calculator (104) configured to calculate relation between key content as a reference of search and each of second contents based on similarity with respect to each of items;
a receiver (101) configured to receive a specific instruction; and
a display controller (106) configured to display, on a display device (170), list information in which pieces of display information of second contents, each with high relation to the key content with respect to one of the items, are arranged in display areas located in directions assigned to the items, respectively, based on a position of display information of the key content, the list information being displayed in first display mode that allows scrolling in the directions assigned to the items, wherein
when the receiver (101) receives the specific instruction indicating one of the items, the display controller (106) displays the display information of the key content and pieces of display information of second contents with high relation to the key content with respect to the item in second display mode that allows scrolling in a direction assigned to the item and a direction opposite the direction.

2. The display processing apparatus of Claim 1, wherein the specific instruction includes:

an instruction to select display information of second content arranged at an outermost position in one of the display areas located in the direction assigned to the item;
an instruction to move a focus further outward from the display information of the second content arranged at the outermost position; and
an instruction to select the item.

3. The display processing apparatus of Claim 1 or 2, wherein
the receiver (101) receives an instruction to select display information of second content arranged at an outermost position in the direction assigned to the item while the display controller (106) provides a display in the second display mode, and
upon receipt of the instruction to select the display information of the second content arranged at the outermost position in the second display mode, the display controller (106) moves the pieces of the display information of the second contents in the direction opposite the direction assigned to the item by a distance corresponding to one piece of display information except for the display information of the key content.

4. The display processing apparatus of Claim 3, wherein, if display information of second content overlaps with the display information of the key content when moved by the distance in the second display mode, the display controller (106) does not display the display information of the second content or preferentially displays the display information of the key content.

5. The display processing apparatus of any one of Claims 1 to 4, wherein
the directions assigned to the items includes a vertical direction and a horizontal direction, and
the display controller (106) is configured to assign the horizontal direction to an item with high priority.

6. The display processing apparatus of any one of Claims 1 to 5, wherein
the receiver (101) receives a different instruction than the specific instruction while the display controller (106) provides a display in the second display mode, and
when the receiver (101) receives the different instruction, the display controller (106) provides a display in the first display mode.

7. The display processing apparatus of Claim 6, wherein the different instruction includes:

an instruction to select display information of second content arranged at an innermost position; and
an instruction provided by pressing a predetermined key.

8. The display processing apparatus of any one of Claims 1 to 7, wherein
the receiver (101) receives an instruction to select display information of second content arranged at an outermost position in the direction assigned to the item while the display controller (106) provides a display in the second display mode, and

upon receipt of the instruction to select the display information of the second content arranged at the outermost position in the second display mode, the display controller (106) moves the pieces of the display information of the second contents in the direction opposite the direction assigned to the item such that the display information of the second content selected by the instruction is displayed at a second outermost position.

9. A display processing method applied to a display processing apparatus, comprising:

a relation calculator calculating relation between key content as a reference of search and each of second contents based on similarity with respect to each of items;
a display controller displaying, on a display device, list information in which pieces of display information of second contents, each with high relation to the key content with respect to one of the items, are arranged in display areas located in directions assigned to the items, respectively, based on a position of display information of the key content, the list information being displayed in first display mode that allows scrolling in the directions assigned to the items;
a receiver receiving a specific instruction; and
the display controller displaying, upon receipt of the specific instruction indicating one of the items, the display information of the key content and pieces of display information of second contents with high relation to the key content with respect to the item in second display mode that allows scrolling in a direction assigned to the item and a direction opposite the direction.

10. The display processing method of Claim 9, wherein the specific instruction includes:

an instruction to select display information of second content arranged at an outermost position in one of the display areas located in the direction assigned to the item;
an instruction to move a focus further outward from the display information of the second content arranged at the outermost position; and
an instruction to select the item.

11. The display processing method of Claim 9 or 10, further comprising:

the receiver receiving an instruction to select display information of second content arranged at an outermost position in the direction assigned to the item while the display controller provides a display in the second display mode; and
the display controller moving, upon receipt of the instruction in the second display mode, the pieces of the display information of the second contents in the direction opposite the direction assigned to the item by a distance corresponding to one piece of display information except for the display information of the key content.

12. The display processing method of Claim 11, wherein, if display information of second content overlaps with the display information of the key content when moved by the distance in the second display mode, the display controller does not display the display information of the second content or preferentially displays the display information of the key content.

13. The display processing method of any one of Claims 9 to 12, wherein the directions assigned to the items includes a vertical direction and a horizontal direction, the display processing method further comprising:

the display controller assigning the horizontal direction to an item with high priority.

14. The display processing method of any one of Claims 9 to 13, further comprising:

the receiver receiving a different instruction than the specific instruction while the display controller provides a display in the second display mode; and
the display controller providing, upon receipt of the different instruction, a display in the first display mode.

15. The display processing method of Claim 14, wherein the different instruction includes:

an instruction to select display information of second content arranged at an innermost position; and
an instruction provided by pressing a predetermined key.

**16.** The display processing method of any one of Claims 9 to 15, further comprising:

the receiver receiving an instruction to select display information of second content arranged at an outermost position in the direction assigned to the item while the display controller provides a display in the second display mode; and

the display controller moving, upon receipt of the instruction in the second display mode, the pieces of the display information of the second contents in the direction opposite the direction assigned to the item such that the display information of the second content selected by the instruction is displayed at a second outermost position.

# FIG.1

# FIG.2

TITLE: LUNCHTIME COMEDY SHOW
CHANNEL: 00
DATE: AUG. 1, 2008 12:00 - 12:40
CAST: XXXXX, YYYYY
SUBTITLE: GREAT LINE UP OF COMEDIANS INVITE YOU
TO ENJOY NOON OF HILARIOUS ENTERTAINMENT
GENRE: COMEDY

# FIG.3

| BROAD-CAST DATE AND TIME | PROGRAM INFORMATION | | | | BROAD-CAST STATION | BROAD-CAST PERIOD | STATUS | | | | | |
|---|---|---|---|---|---|---|---|---|---|---|---|---|
| | TITLE | CAST | KEYWORD | GENRE | | | CURRENTLY BROADCASTED | PRO-GRAMMED | CURRENTLY RECORDED | TIMER-RECORDED | CURRENTLY ARCHIVED | ARCHIVED |
| △/○ | B5536OM | AABC | RESORT… | DRAMA | A | PM 8:00 TO 9:00 | | | | | | ○ |
| △/× | H×325R | …… | …… | NEWS | C | AM10:00 TO 11:00 | | | | ○ | | ○ |
| △/× | L358△*6 | …… | …… | SPORTS | A | PM 11:00 TO 12:30 | | | | | | ○ |
| △/□ | CC4R4i9Z | AABC | …… | DRAMA | E | PM 8:00 TO 9:00 | ○ | | | | ○ | |
| △/△○ | ZZRCCR4 | …… | …… | DRAMA | B | PM 8:00 TO 9:00 | | ○ | | | | |
| △/△○ | R4G257O x | …… | …… | NEWS | A | PM 10:00 TO 11:00 | | | | | | |
| □/× | ZZRCC4Z | …… | …… | …… | …… | …… | | ○ | | | | |
| ⋮ | ⋮ | ⋮ | ⋮ | ⋮ | ⋮ | ⋮ | ⋮ | ⋮ | ⋮ | ⋮ | ⋮ | ⋮ |

EP 2 296 369 A2

# FIG.4

PROGRAM GUIDE    OCT. 18 (MON) 19 (TUE) 20 (WED) 21 (THU) 22 (FRI) 23 (SAT) 24 (SUN) 25 (MON)    OCT. 18 (MON) PM 5:13

| | 1 STATION A 013 | 2 STATION B 021 | 4 STATION C 141 | 5 STATION D 153 | 6 STATION E 161 | 7 STATION F 172 | 8 STATION G 181 | 10 |
|---|---|---|---|---|---|---|---|---|
| PM 5 | 00 B5536OM | 00 B93KFA | 00 TYKA11 | 00 39VREK | 00 3992KKK | 00 NTGR7L4 | 00 S46J88 | PM 5 |
| PM 6 | | 30VFKA | | | | VGJM01 | | PM 6 |
| PM 7 | ON582 | CS8912S | TTY03B | | | N3K2MC | | PM 7 |
| | | | Z993DZZ | KIGMR1 | B03K301 | | T41XZZ | |
| PM 8 | 1981YU1 | CS8912S | AY83MJ | AT13PP | CHI0813 | 93MVLL | 5F42FG | PM 8 |
| | | L358△*6 | | | | YJ6J43 | | |
| PM 9 | AB79N | CS8912S | | | | KTA39 | | PM 9 |
| | | | | | KK311LZ | | | |
| PM 10 | L358△*6 | CTB2S | AA281HT | TBIZ03 | J330XL | AAHAW / HA2123 | II123AA | PM 10 |

B TO PRESENT TIME    R DATE SWITCH    G PROGRAM SEARCH    Y PROGRAM INFORMATION

# FIG.5

# FIG.6A

C1

C1-1

C1-2 — L358△∗6

# FIG.6B

C1-3       C1

CHANNEL 00

LUNCHTIME COMEDY SHOW

C1-4 — GREAT LINE UP OF
COMEDIANS INVITE YOU TO
ENJOY NOON OF HILARIOUS
ENTERTAINMENT

C1-5 — 8/1 12:00-12:40

# FIG.7A

# FIG.7B

# FIG.8

EP 2 296 369 A2

# FIG.9

SEVEN PIECES OF DISPLAY INFORMATION WITHIN HORIZONTAL WIDTH OF DISPLAY AREA ─ 901

─ 902

FIVE PIECES OF DISPLAY INFORMATION WITHIN VERTICAL WIDTH OF DISPLAY AREA

C40 C39 C38 C37 C36

C16 C15 C14

C41 C35

C42 C34

C17 C13

C43 C18 KEY CONTENT C12 C33

C19 C11

C44 C32

C45 C31

C20 C21 C22

C46 C47 C48 C49 C50

# FIG.10

# FIG.11

# FIG.12

EP 2 296 369 A2

# FIG.13

EP 2 296 369 A2

FIG.14

# FIG.15

FOCUS MOVEMENT

ITEM DISPLAY MODE

FIG.16

# FIG.17

1701
TRANSLUCENT

DISPLAY AREA

K2

K3
KEY
CONTENT
C1

1703

K1

K4

1702
TRANSLUCENT

FIG.18

# FIG.19

← RELEASE FOCUS FIXATION AND MOVE FOCUS
←-- FIX FOCUS AND SCROLL
←·- MOVE FOCUS
←---- SWITCH DISPLAY MODE TO FULL DISPLAY MODE DUE TO FOCUS MOVEMENT

EP 2 296 369 A2

FIG.20

# FIG.21

C201

C1

KEY CONTENT

C202

C203

C204

C205

2113

2112

C211

2103

2101

2102

LESS RELATION

EP 2 296 369 A2

# FIG.22

DISPLAY AREA

2203
2202
2201
C1
KEY CONTENT
2204
2205
2206
FOCUSED CONTENT

2102
LESS RELATION

2202
2201

EP 2 296 369 A2

# FIG.23

```
                    ( START )
                        │
    ┌───────────────────▼──────────────────┐
    │ DISPLAY RELATED CONTENT LIST SCREEN   │── S2301
    │        IN FULL DISPLAY MODE           │
    └───────────────────┬──────────────────┘
                        │                        S2302
                        ▼
              ╱──────────────────╲      NO
             ╱        HAS          ╲──────────────►
             ╲ INSTRUCTION BEEN    ╱
              ╲ RECEIVED TO        ╱
               ╲ MOVE FOCUS?      ╱
                ╲────────────────╱
                        │ YES
    ┌───────────────────▼──────────────────┐
    │             MOVE FOCUS                │── S2303
    └───────────────────┬──────────────────┘
                        │                        S2304
                        ▼
              ╱──────────────────╲      NO
             ╱   HAS FOCUS MOVED  ╲──────────────►
             ╲   TO OUTERMOST     ╱
              ╲   ELLIPSE?        ╱
                ╲────────────────╱
                        │ YES
    ┌───────────────────▼──────────────────┐
    │ DISPLAY RELATED CONTENT LIST SCREEN   │── S2305
    │        IN ITEM DISPLAY MODE           │
    └───────────────────┬──────────────────┘
                        │                        S2306
                        ▼
              ╱──────────────────╲      NO
             ╱        HAS          ╲──────────────►
             ╲ INSTRUCTION BEEN    ╱
              ╲ RECEIVED TO        ╱
               ╲ MOVE FOCUS?      ╱
                ╲────────────────╱
                        │ YES
    ┌───────────────────▼──────────────────┐
    │             MOVE FOCUS                │── S2307
    └───────────────────┬──────────────────┘
                        │                        S2308
                        ▼
              ╱──────────────────╲      NO
             ╱   HAS FOCUS MOVED  ╲──────────────┐
             ╲   TO OUTERMOST     ╱              │
              ╲   POSITION?       ╱              │
                ╲────────────────╱               │
                        │ YES      S2309          │
    ┌───────────────────▼──────────────────┐     │
    │   MOVE DISPLAY INFORMATION OF         │     │
    │   CONTENTS SO THAT DISPLAY            │     │
    │   INFORMATION OF FOCUSED CONTENT IS   │     │
    │   DISPLAYED AT SECOND OUTERMOST       │     │
    │            POSITION                   │     │
    └──────────────────────────────────────┘     │
                                                  │  S2310
                                                  ▼
                                        ╱──────────────────╲   NO
                                       ╱  HAS FOCUS MOVED   ╲──────►
                                       ╲  TO INNERMOST       ╱
                                        ╲ POSITION?         ╱
                                          ╲────────────────╱
                                                  │ YES
```

# FIG.24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002175321 A